# EUROPEAN PATENT APPLICATION

(11) **EP 2 735 733 A1**
(43) Date of publication of application: **28.05.2014**
(21) Application number: 12817685.6
(22) Date of filing: 08.06.2012
(51) Int. Cl.: F03D 3/06

(54) **VERTICAL AXIS TYPE MAGNUS WIND TURBINE GENERATOR**

(30) Priority: 22.07.2011 JP 2011160967
(71) Applicant: Shimizu, Atsushi, Osaka-shi, Osaka 532-0011 (JP)
(72) Inventor: Shimizu, Atsushi, Osaka-shi, Osaka 532-0011 (JP)
(74) Representative: Grünecker, Kinkeldey, Stockmair & Schwanhäusser
(86) International application number: PCT/JP2012/003762
(87) International publication number: WO 2013/014848

(57) **Abstract**

Furnishing a vertical-axis-type Magnus-system wind power electric generator such that the electric-generation efficiency is high with simple controlling.

A vertical-axis-type Magnus-system wind power electric generator, the windmill part (2) that has the electric-generator rotation axis (3a), and rotates by wind power on its longitudinal axis; and the electric generator (3) that has the stator (101), and the rotator (100) joined to the windmill part (2), wherein the windmill part (2) has: the barrel set (50) that possesses the two barrels (5) which are arranged in parallel with the electric-generator rotation axis (3a), and rotate around the electric-generator rotation axis (3a); and the supporting member (4) that joins the barrel set (50) to the electric-generator rotation axis (3a), wherein each of the two barrels (5) is configured so as to be capable of spinning around the supporting axis (6) that is supported by the supporting member (4), and spinning directions of the two barrels (5) are directions opposite each other.

## Description

### Technical Field

The present invention relates to a vertical-axis-type Magnus-system wind power electric generator.

### Background Art

It is possible to classify wind power electric generators, according to the supporting direction of the windmill rotation axis, into one of a horizontal-axis or vertical-axis type, and it is possible to further classify wind power electric generators of a horizontal-axis type into one of propeller or Magnus system. A horizontal-axis-type propeller-system wind power electric generator is a system that allows, by a lift force generated on a propeller (a blade of a wing shape) by the airflow, an electric generator to rotate, and is the mainstream of the commercial wind power electric generation worldwide, but there are problems as below.

First, for a horizontal-axis-type propeller-system wind power electric generator, since a large wind velocity is necessitated in order to allow the propeller to rotate and, moreover, the orientation of the propeller is necessitated to be adjusted to the wind direction, in an environment where as in Japan the average wind velocity is low and, besides, the wind direction frequently changes, the places are restricted where the electric-generation capability that balances with the installation cost can be obtained.

Next, because overrotation of the propeller by a strong wind is generated and damage is easily caused, the electric generator is necessitated to be stopped at the time of strong wind.

Moreover, because installation on a tower at least equal to or more than the propeller diameter is necessitated, damage is easily caused by a thunderbolt and, because the electric-generation part is installed at a high place with adjustment to the propeller rotation axis, the maintenance cost becomes high.

Further, transportation or installation construction of a propeller and tower is difficult, and a wind power electric generator capable of being installed particularly on the rooftop of a building or house is then limited to a small-sized machine of small electric-generation capacity.

Furthermore, for a propeller, the manufacturing is difficult and the manufacturing cost is high because the shape is complicated.

In addition to these, for a horizontal-axis-type propeller-system wind power electric generator, causing of environmental issues such as a low frequency noise a propeller generates, a bird strike or the like is becoming an issue.

Thereupon, recently, for example, a Magnus-system wind power electric generator of such a horizontal-axis type as is shown in Patent Document 1 has been proposed.

This wind power electric generator is a system which, with a blade that generates a lift force being not of a wing shape as propeller system but of a column shape (hereafter called barrel), allows, by a Magnus force generated on a barrel when the barrel has been allowed to spin in the airflow, an electric generator to rotate. Since it is possible to control, by controlling of the spinning rotation number of this barrel, the Magnus force, it is possible to heighten the electric-generation efficiency in the low-wind-velocity region and, besides, destruction under a strong wind is thought to be less prone to happen.

Moreover, a blade of a barrel shape is, being of high rigidity and less prone to be disrupted compared with a blade of a wing shape, capable of being manufactured at a low cost as well because the manufacturing is easy.

Further, because it is possible to lower the blade rotation number around the electric-generator rotation axis, there are merits such that for instance generation of a low frequency noise or bird strike is less prone to occur, and the technique has been noticed.

But, solution to fundamental problems of a horizontal-axis-type wind power electric generator, such as a necessity of controlling with respect to the wind direction or, a thunderbolt risk or maintainability because of a tower shape, badness of the installability and the like, has not been achieved.

On the other hand, it is possible to further classify wind power electric generators of a vertical-axis type into one of a lift-force or drag-force type.

As for the characteristics of the wind power electric generator of a vertical-axis type, because no influence of the wind direction is exerted, a following-up mechanism with respect to the wind direction becomes unnecessary. Moreover, since the electric-generator rotation axis is vertical, it is possible to install the electric-generation portion near the ground, and the maintainability is high compared with the horizontal-axis type. Further, since a high tower is not necessarily necessitated, a medium-sized machine or large-sized machine of high electric-generation capacity is capable of being installed on the rooftop of a building or house.

And, the vertical-axis drag-force type is one that obtains a rotation force by a wind pressure of the airflow, and a representative one is the Savonius system. The Savonius system excels in self-startability and rotation torque in the low-wind-velocity area, but the tip speed ratio is in principle equal to or less than 1, and the efficiency in the medium-wind-velocity area or more is not good.

Because of that, it is often utilized as a starting auxiliary for the lift-force type next mentioned.

A representative one of a vertical-axis lift-force type is the gyromill system or the Darius system. Because these possess, similarly to the horizontal-axis-type propeller system, blades of a wing shape, it is possible to allow the tip speed ratio to be equal to or more than 1, and the efficiency is good compared with the drag-force type. But because, for a blade of a wing shape, the lift force is generated only at an attack angle in a certain range with respect to the wind direction, for the vertical-axis type with the attack angle of the blade with respect to the wind direction always changing, the efficiency is worse than a wind power electric generator of a horizontal-axis type and, particularly in a low-wind-velocity area such that the tip speed ratio becomes equal to or less than 1, the electric-generation capacity becomes low, and the self-startability is also bad.

Moreover, similarly to the horizontal-axis-type propeller system, there is a problem such that overrotation by a strong wind is generated, and damage occurs. Because of this, a small-sized gyromill type only just comes into use as a small-scale electric generator for a streetlamp and the like.

Thereupon, recently, for example, vertical-axis-type Magnus-system wind power electric generators as shown in Patent Document 2 and Patent Document 3 have been proposed.

These wind power electric generators can be said to be wind power electric generators with ideal property in an environment as Japan, because no influence of the wind direction change is exerted because they are of a vertical-axis type, and it is possible to heighten the electric-generation capability in the low-wind-velocity area controlling the Magnus force through controlling of the barrel spinning rotation number and, besides, destruction even under a strong wind is less prone to happen because they are of Magnus system.

Moreover, a vertical-axis-type Magnus-system wind power electric generator, because also possessing, in addition to the superiority of the maintenance cost that is the characteristic of the vertical-axis type, the superiority of the manufacturing cost that is the characteristic of the Magnus system, becomes capable of being manufactured and put into practice at a lower cost than existing wind power electric generators.

### Prior Art Documents

### Patent Documents

[Patent Document 1] Japanese published patent application 2007-085327
[Patent Document 2] Japanese published patent application 2008-175070
[Patent Document 3] Japanese published patent application 2010-121518

### Summary of Invention

### Problems to be Solved by Invention

The above-mentioned vertical-axis-type Magnus-system wind power electric generator has not been implemented at the point in time of the application of the present invention and, as a big technical problem towards the implementation of the Magnus-system wind power electric generator of a vertical-axis type, cited is that, on the upwind and downwind sides of the electric-generator rotation axis, the rotation torque of the electric-generator rotation axis generated by the Magnus force becomes reversed.

Thereupon, in the vertical-axis-type Magnus-system wind power electric generator mentioned in Patent Document 2, a configuration to shield the barrel on the downwind side is proposed.

However, in this system, it is possible to generate in the electric generator a rotation force in one direction, by using only the Magnus force that arises on the barrel on the upwind side but, because the airflow on the downwind side is not used, it cannot be said that the electric-generation efficiency is high.

Moreover, for example, the vertical-axis-type Magnus-system wind power electric generator mentioned in Patent Document 3 is characterized in that it comprises a measuring means of the wind direction, an azimuth angle measuring means of the barrel, and a measuring means of the wind velocity, where individually controlling, based on discrepancy between the wind direction and the barrel position, and the spinning rotation number of the barrel, the spinning rotation numbers of the barrels.

In this system, because whether the barrel is on the upwind side of the electric-generator rotation axis or is on the downwind side is judged to control the spinning rotation numbers of the barrels, it is thought to be possible to use the airflows on both upwind and downwind sides of the electric-generator rotation axis.

However, because the spinning rotation numbers of the barrels are allowed to vary individually and besides frequently, the controlling becomes complicated.

An object of the present invention is, in consideration of the above-mentioned problems, to furnish a vertical-axis-type Magnus-system wind power electric generator such that the electric-generation efficiency is high with simple controlling.

### Means of Solving Problem

In order to achieve the above-mentioned object, the 1^{st} aspect of the present invention is
a vertical-axis-type Magnus-system wind power electric generator,
a windmill part that has a longitudinal axis, and rotates by wind power on its longitudinal axis; and
an electric generator that has a stator, and a rotator joined to said windmill part, wherein
said windmill part has:
a barrel set that possesses two barrels which are arranged in parallel with said longitudinal axis, and rotate around said longitudinal axis; and
a supporting member that joins said barrel set to said longitudinal axis, wherein
each of said two barrels is configured so as to be capable of spinning around a supporting axis that is supported by said supporting member, and
spinning directions of said two barrels are directions opposite each other.

The 2^{nd} aspect of the present invention is
a vertical-axis-type Magnus-system wind power electric generator according to the 1^{st} aspect of the present invention, wherein
said one barrel of said two barrels, which is on an inside, is arranged between said other barrel that is on an outside and said longitudinal axis.

The 3^{rd} aspect of the present invention is
a vertical-axis-type Magnus-system wind power electric generator according to the 2^{nd} aspect of the present invention, further comprising an airflow shielding means provided between said two barrels, in order to shield an airflow to said barrel of said two barrels that is on a downwind side.

The 4^{th} aspect of the present invention is
a vertical-axis-type Magnus-system wind power electric generator according to the 3^{rd} aspect of the present invention, wherein
at least on a side end face within a surface of said airflow shielding means, a shape for allowing an airflow to diffuse or disperse is formed.

The 5^{th} aspect of the present invention is
a vertical-axis-type Magnus-system wind power electric generator according to the 1^{st} aspect of the present invention, comprising:
a stopping-time detecting part that detects a stopping time of said rotator;
a switching part that utilizes external electric power to employ said electric generator as a power source;
an electric-generator controlling part that performs controlling of said rotator; and
a spinning controlling part that performs controlling of spinning of said barrel, wherein
in a case where said rotator is not stopping,
said spinning controlling part, every certain time, performs controlling so as to allow said barrel to spin at a rotation velocity equal to or more than a second predetermined rotation velocity, and
in a case where said stopping time of said rotator is equal to or more than a predetermined time,
said electric-generator controlling part, every certain time, switches said electric generator to said power source by said switching part, and allows said rotator to drive at second predetermined rotation velocity, and said spinning controlling part performs controlling so as to allow said barrel to spin at a rotation velocity equal to or more than second predetermined rotation velocity, or at a rotation velocity equal to or less than a third predetermined rotation velocity.

The 6^{th} aspect of the present invention is
a vertical-axis-type Magnus-system wind power electric generator according to the 1^{st} aspect of the present invention, comprising a current-rectifying plate provided at least either between said barrel set and said longitudinal axis, or on an outside of said supporting member.

The 1^{st} aspect of the invention related to the present invention is
a vertical-axis-type Magnus-system wind power electric generator according to the above-mentioned 1^{st} aspect of the present invention, wherein
said rotator is joined with said longitudinal axis, and
said longitudinal axis rotates along with rotation of said windmill part.

The 2^{nd} aspect of the invention related to the present invention is
a vertical-axis-type Magnus-system wind power electric generator according to the above-mentioned 1^{st} aspect of the present invention, comprising
a pedestal provided on a lower side of said windmill part, wherein
said rotator is joined with said windmill part, and
said longitudinal axis is fixed to said pedestal.

The 3^{rd} aspect of the invention related to the present invention is
a vertical-axis-type Magnus-system wind power electric generator according to the above-mentioned 1^{st} aspect of the present invention, wherein
said barrel sets are plurally provided, and
said plural barrel sets are, in plan view, arranged around said longitudinal axis at equal intervals.

The 4^{th} aspect of the invention related to the present invention is
a vertical-axis-type Magnus-system wind power electric generator according to the above-mentioned 1^{st} aspect of the present invention, wherein
said barrel sets are plurally provided, and
said plural barrel sets are, in plan view, arranged around said longitudinal axis at equal intervals, comprising:
driving parts that are provided respectively with respect to said plural barrel sets, and allow said two barrels of their own barrel sets to spin; and
first transmitting mechanisms that transmit power of said respective driving parts to the two barrels of said barrel sets, wherein
said first transmitting mechanism has:
   a first gear member provided on said supporting axis of the barrel on the inside;
   a second gear member that is provided on said supporting axis of the barrel on the outside, and has meshed with said first gear member; and
   a driving gear that is provided on an axis of said driving part, and has meshed with said first gear member or said second gear member.

The 5^{th} aspect of the invention related to the present invention is
a vertical-axis-type Magnus-system wind power electric generator according to the above-mentioned 1^{st} aspect of the present invention, wherein
said barrel sets are plurally provided, and
said plural barrel sets are, in plan view, arranged around said longitudinal axis at equal intervals, comprising:
a driving part that allows all said barrels to spin; and
a second transmitting mechanism that transmits to all said barrels, wherein
said second transmitting mechanism has:
   first gear members provided on said respective supporting axes of said barrels on the inside of the barrel sets;
   second gear members that are provided on said supporting axes of the barrels on the outside, and have meshed with said first gear members;
   a middle gear member arranged, so as to mesh with said plural said first gear members, in their middle; and
   a driving gear member that is provided on a driving axis of said driving part, and has meshed with said middle gear member.

The 6^{th} aspect of the invention related to the present invention is
a vertical-axis-type Magnus-system wind power electric generator according to the above-mentioned 1^{st} aspect of the present invention, wherein
on a surface of said barrel, dimple-shaped depressions or protuberances are formed.

The 7^{th} aspect of the invention related to the present invention is
a vertical-axis-type Magnus-system wind power electric generator according to the above-mentioned 1^{st} aspect of the present invention, wherein
on a surface of said barrel, ribs are formed that are parallel with respect to said supporting axis, vertical, or helix-shaped.

The 8^{th} aspect of the invention related to the present invention is
a vertical-axis-type Magnus-system wind power electric generator according to the above-mentioned 1^{st} aspect of the present invention, wherein
said barrel is of a hollow cylinder shape.

The 9^{th} aspect of the invention related to the present invention is
a vertical-axis-type Magnus-system wind power electric generator according to the above-mentioned 1^{st} aspect of the present invention, wherein
said barrel is configured so as to be capable of being in a spinning-axis direction divided into multiple barrel portions,
joining parts are provided that join respective barrel portions, and
said supporting axis is provided at least either downward from said barrel portion arranged on a lowermost side, or upward from said barrel portion arranged on a uppermost side.

The 10^{th} aspect of the invention related to the present invention is
a vertical-axis-type Magnus-system wind power electric generator according to the above-mentioned 1^{st} aspect of the present invention, comprising:
an electric-generation rotation-number detecting part that detects rotation number of said rotator; and
a spinning controlling part that controls, depending on the rotation number of said rotator, spinning number of times of said barrel.

The 11^{th} aspect of the invention related to the present invention is
a vertical-axis-type Magnus-system wind power electric generator according to the above-mentioned 1^{st} aspect of the present invention, comprising:
a wind velocity detecting part that detects a wind velocity;
a stopping detecting part that detects stopping of said rotator;
a switching part that utilizes external electric power to employ said electric generator as a power source; and
an electric-generator controlling part that, in a state where said stopping has been detected, in a case where the wind velocity that is detected is less than a first predetermined wind velocity, every certain time, switches said electric generator to said power source by said switching part, and allows said rotator to, during a predetermined time, drive at a first predetermined rotation velocity.

The 12^{th} aspect of the invention related to the present invention is
a vertical-axis-type Magnus-system wind power electric generator according to the 11^{th} aspect of the invention related to the present invention, wherein
said electric-generator controlling part does not switch, in a case where the wind velocity that is detected is less than a second predetermined wind velocity that is slower than said first predetermined wind velocity, said electric generator to said power source.

The 13^{th} aspect of the invention related to the present invention is
a vertical-axis-type Magnus-system wind power electric generator according to the above-mentioned 1^{st} aspect of the present invention, comprising:
a stopping-time detecting part that detects a stopping time of said rotator;
a switching part that utilizes external electric power to employ said electric generator as a power source; and
an electric-generator controlling part that, in a case where said stopping time is equal to or more than a predetermined time, every certain time, switches said electric generator to said power source by said switching part, and allows said rotator to, during a predetermined time, drive at a first predetermined rotation velocity.

The 14^{th} aspect of the invention related to the present invention is
a vertical-axis-type Magnus-system wind power electric generator according to the above-mentioned 1^{st} aspect of the present invention, comprising:
a stopping-time detecting part that detects a stopping time of said rotator;
a switching part that utilizes external electric power to employ said electric generator as a power source; and
a spinning controlling part that, in a case where said stopping time is equal to or more than a predetermined time, carries out controlling so as to allow said barrel to spin at a rotation velocity equal to or more than a first predetermined rotation velocity.

The 15^{th} aspect of the invention related to the present invention is
a vertical-axis-type Magnus-system wind power electric generator according to the above-mentioned 1^{st} aspect of the present invention, wherein
said supporting member is of a disk shape.

The 16^{th} aspect of the invention related to the present invention is
a vertical-axis-type Magnus-system wind power electric generator according to the above-mentioned 1^{st} aspect of the present invention, wherein
said supporting member is formed so as to demonstrate a flywheel effect.

The 17^{th} aspect of the invention related to the present invention is
a vertical-axis-type Magnus-system wind power electric generator according to the 15^{th} or 16^{th} aspect of the invention related to the present invention, wherein
in said supporting member, plural axis bearing parts for supporting said supporting axes of the barrels are formed, and
on any of said plural axis bearing parts are selectively arranged said barrels.

The 18^{th} aspect of the invention related to the present invention is
a vertical-axis-type Magnus-system wind power electric generator according to the above-mentioned 1^{st} aspect of the present invention, wherein
said supporting member has an arm-shaped member formed so as to carry out tying between said barrel set and said longitudinal axis, comprising
an expanding-and-contracting part provided between said longitudinal axis and said barrel set, of said supporting member, wherein
said expanding-and-contracting part has a spring member that carries out energization so as to contract a distance between said longitudinal axis and said barrel set, and
on an occasion of electric generation, by a balance of an energization force of said spring member, and a centrifugal force generated on said two barrels by rotation around said longitudinal axis, the distance between said longitudinal axis and said barrel set changes.

The 19^{th} aspect of the invention related to the present invention is
a vertical-axis-type Magnus-system wind power electric generator according to the above-mentioned 15^{st} aspect of the present invention, comprising:
a pedestal provided on a lower side of said windmill part;
an upper-side supporting member that supports, with their upper sides, said barrels being capable of rotating; and
a frame structure that supports said upper-side supporting member being capable of rotating, on said pedestal.

### Effects of Invention

With the present invention, it is possible to furnish a vertical-axis-type Magnus-system wind power electric generator such that the electric-generation efficiency is high with simple controlling.

### Brief Description of Drawings

[Figure 1] Figure 1 is a perspective configuration view of the vertical-axis-type Magnus-system wind power electric generator in Embodiment 1 pertaining to the present invention.
[Figure 2] Figure 2 is an XX' sectional configuration view of Figure 1.
[Figure 3] Figure 3 is a plan configuration view that shows the arrangement of the barrels of the vertical-axis-type Magnus-system wind power electric generator in Embodiment 1 pertaining to the present invention.
[Figure 4] Figure 4 is a plan configuration view for describing the action of the vertical-axis-type Magnus-system wind power electric generator of Embodiment 1 pertaining to the present invention.
[Figure 5] Figures 5(a)-(d) are views that show the relations between the spinning of the two barrels in each barrel set of the vertical-axis-type Magnus-system wind power electric generator of Embodiment 1 pertaining to the present invention, the wind's direction and the Magnus forces.
[Figure 6] Figure 6 is a perspective configuration view of the vertical-axis-type Magnus-system wind power electric generator in Embodiment 2 pertaining to the present invention.
[Figure 7] Figure 7 is a ZZ' sectional configuration view of Figure 6.
[Figure 8] Figure 8 is a perspective configuration view of the vertical-axis-type Magnus-system wind power electric generator in a variant example of Embodiment 2 pertaining to the present invention.
[Figure 9] Figure 9 is a sectional configuration view viewed from the front of the vertical-axis-type Magnus-system wind power electric generator in a variant example of Embodiment 2 pertaining to the present invention.
[Figure 10] Figure 10 is a sectional configuration view viewed from the front of the vertical-axis-type Magnus-system wind power electric generator in Embodiment 3 pertaining to the present invention.
[Figure 11] Figure 11 is a sectional configuration view between the YY' of Figure 10.
[Figure 12] Figure 12 is a sectional configuration view viewed from the front of the vertical-axis-type Magnus-system wind power electric generator of Embodiment 4 pertaining to the present invention.
[Figure 13] Figure 13 is a sectional configuration view viewed from the front of the vertical-axis-type Magnus-system wind power electric generator of Embodiment 5 pertaining to the present invention.
[Figure 14] Figure 14 is a sectional configuration view viewed from the front of the vertical-axis-type Magnus-system wind power electric generator in Embodiment 6 pertaining to the present invention.
[Figure 15] Figure 15 is a sectional configuration view viewed from the front of the vertical-axis-type Magnus-system wind power electric generator in a variant example of Embodiment 1 pertaining to the present invention.
[Figure 16] Figure 16 is a perspective configuration view of the vertical-axis-type Magnus-system wind power electric generator in Embodiment 7 pertaining to the present invention.
[Figure 17] Figure 17 is an enlarged perspective configuration view of a neighborhood of the expanding-and-contracting part of the vertical-axis-type Magnus-system wind power electric generator in Embodiment 7 pertaining to the present invention.
[Figure 18] Figure 18 is an enlarged perspective configuration view of a neighborhood of the expanding-and-contracting part for describing the expanding-and-contracting action of the vertical-axis-type Magnus-system wind power electric generator in Embodiment 7 pertaining to the present invention.

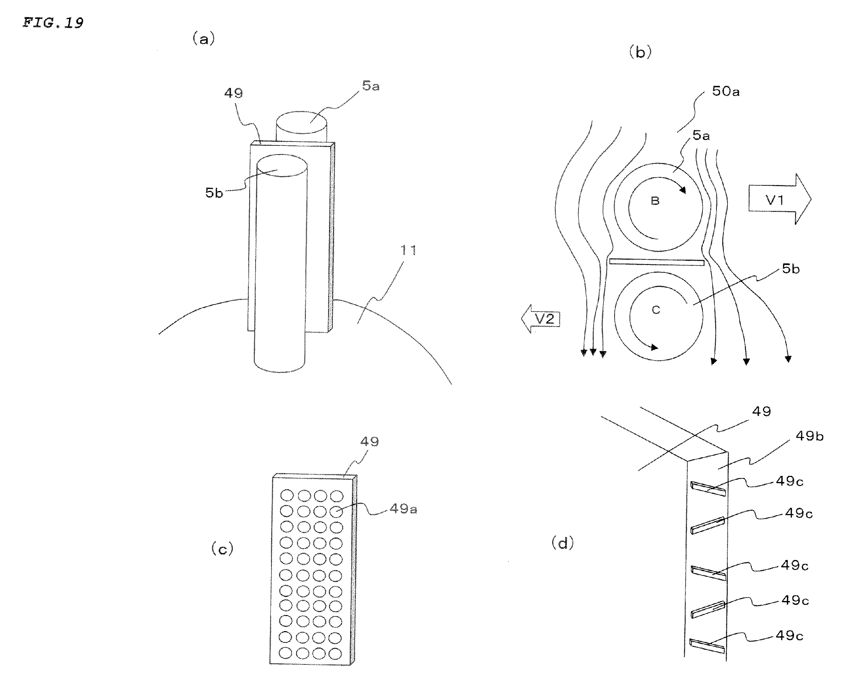

[Figure 19] Figure 19(a) is a perspective configuration view that shows the state where between the two barrels of the barrel set of the vertical-axis-type Magnus-system wind power electric generator in an embodiment pertaining to the present invention is provided an airflow shielding plate; Figure 19(b) is a plan configuration view that shows the relation between the spinning of the two barrels and the Magnus forces that arise by the wind's direction; Figure 19(c) is a perspective configuration view of the airflow shielding plate; and Figure 19(d) is a side-end-face enlarged view of the airflow shielding plate.
[Figure 20] Figures 20(a)-(e) are perspective configuration views that show variant examples of the barrel of the vertical-axis-type Magnus-system wind power electric generator in an embodiment pertaining to the present invention.
[Figure 21] Figure 21 is a perspective configuration view that shows a variant example of the barrel of the vertical-axis-type Magnus-system wind power electric generator in an embodiment pertaining to the present invention.
[Figure 22] Figure 22 is a perspective configuration view that shows a variant example of the barrel of the vertical-axis-type Magnus-system wind power electric generator in an embodiment pertaining to the present invention.
[Figure 23] Figures 23(a) and (b) are perspective configuration views that show variant examples of the barrel of the vertical-axis-type Magnus-system wind power electric generator in an embodiment pertaining to the present invention.

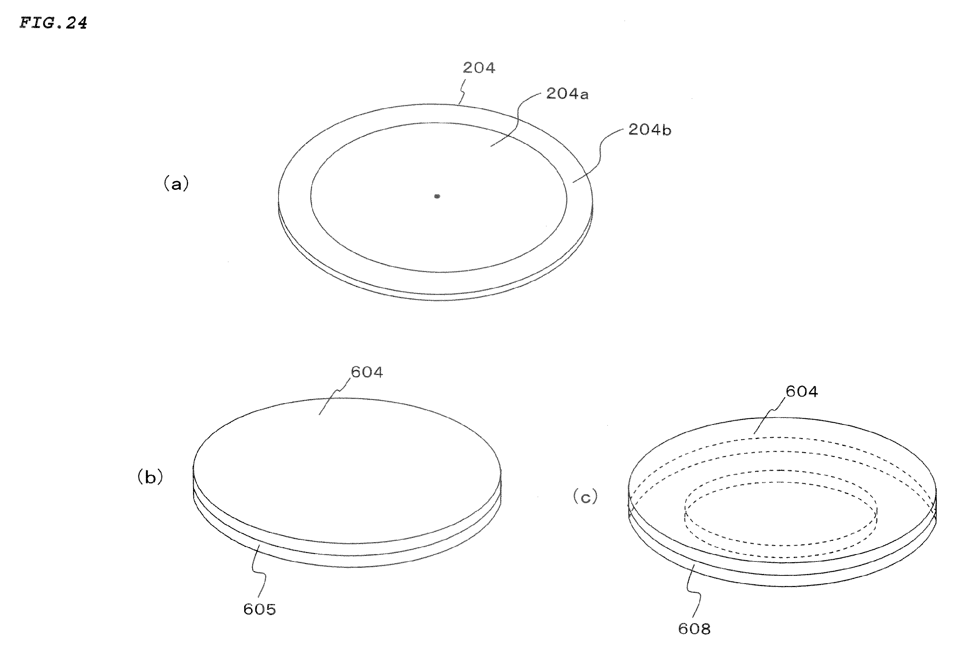

[Figure 24] Figure 24(a) is a perspective configuration view that shows a variant example of the supporting member of the vertical-axis-type Magnus-system wind power electric generator in an embodiment pertaining to the present invention; Figure 24(b) is a perspective configuration view in the state where a weight has been provided on the lower side of the supporting member of the vertical-axis-type Magnus-system wind power electric generator in an embodiment pertaining to the present invention; and Figure 24(c) is a perspective configuration view in the state where a weight has been provided in the surrounding of the lower side of the supporting member of the vertical-axis-type Magnus-system wind power electric generator in an embodiment pertaining to the present invention.
[Figure 25] Figure 25(a) is a perspective configuration view that shows a variant example of the supporting member of the vertical-axis-type Magnus-system wind power electric generator in a variant example of Embodiment 2 pertaining to the present invention; and Figure 25(b) is a plan configuration view that shows a variant example of the supporting member of the vertical-axis-type Magnus-system wind power electric generator in a variant example of Embodiment 2 pertaining to the present invention.
[Figure 26] Figure 26 is a plan configuration view that shows a variant example of the arrangement of the barrel sets of the vertical-axis-type Magnus-system wind power electric generator in an embodiment pertaining to the present invention.
[Figure 27] Figure 27 is a plan configuration view that shows a variant example of the supporting member of the vertical-axis-type Magnus-system wind power electric generator in Embodiments 1-6 pertaining to the present invention.
[Figure 28] Figure 28 is a perspective configuration view that shows the state where a frame structure that supports the upper side of the windmill part has been provided for the vertical-axis-type Magnus-system wind power electric generator in an embodiment pertaining to the present invention.
[Figure 29] Figure 29 is a sectional configuration view viewed from the front that shows the state where longitudinal frames that connect the upper-side supporting member and the lower-side supporting member have been provided for the vertical-axis-type Magnus-system wind power electric generator in an embodiment pertaining to the present invention.
[Figure 30] Figure 30 is a plan configuration view for describing the structure where current-rectifying plates have been provided for the vertical-axis-type Magnus-system wind power electric generator in an embodiment pertaining to the present invention.
[Figure 31] Figure 31 is a plan configuration view for describing the configuration where the arrangement of the barrels of the vertical-axis-type Magnus-system wind power electric generator in an embodiment pertaining to the present invention has been altered.
[Figure 32] Figure 32 is a plan configuration view for describing the configuration where the arrangement of the barrels of the vertical-axis-type Magnus-system wind power electric generator in an embodiment pertaining to the present invention has been altered.

### Modes for Carrying Out Invention

In what follows, regarding embodiments pertaining to the present invention, descriptions are given referring to the drawings.

### (Embodiment 1)

In what follows, descriptions are given regarding the vertical-axis-type Magnus-system wind power electric generator in Embodiment 1 pertaining to the present invention.

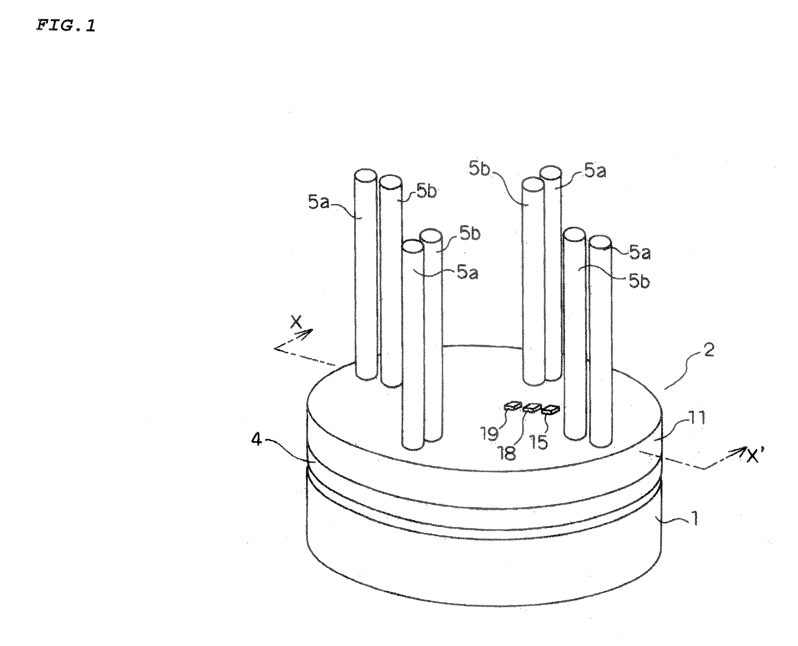

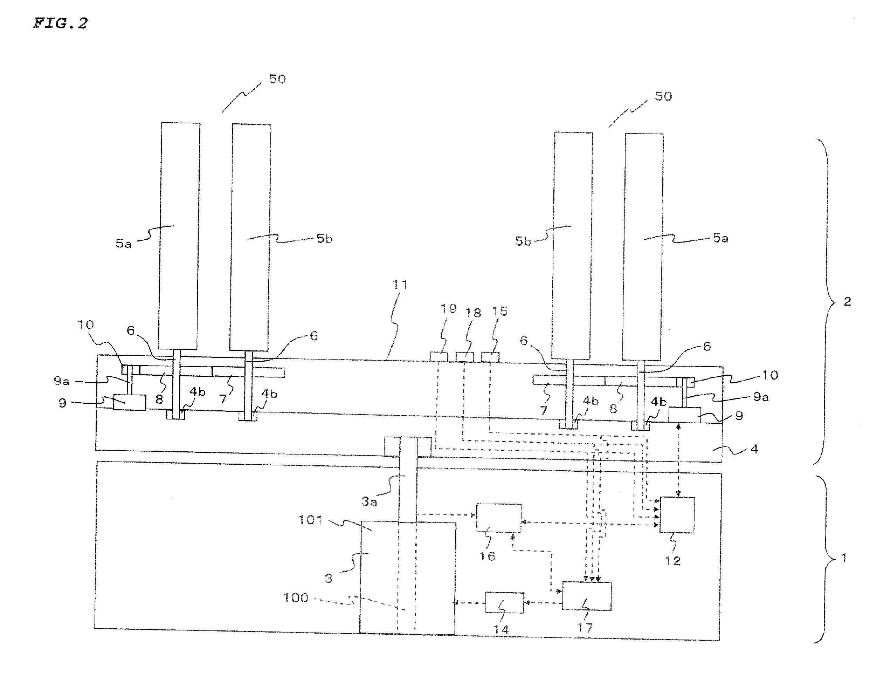

Figure 1 is a perspective configuration view of the vertical-axis-type Magnus-system wind power electric generator in Embodiment 1 pertaining to the present invention. Moreover, Figure 2 is a sectional configuration view between the XX' of Figure 1. As shown in Figure 1 and Figure 2, the vertical-axis-type Magnus-system wind power electric generator of present Embodiment 1 comprises the pedestal 1, and the windmill part 2 that is, being capable of rotating, arranged on the upper side of the pedestal 1. And, within the pedestal 1 is arranged the electric generator 3, the electric-generator rotation axis 3a is, in the electric generator 3, provided vertically upward, and this electric-generator rotation axis 3a is joining the electric generator 3 and the windmill part 2. This electric generator 3 is an electric generator of an inner-rotor type, the lower portion of the electric-generator rotation axis 3a is the rotator 100, and on its outside is provided the stator 101. And, the windmill part 2 rotates, thereby the electric-generator rotation axis 3a rotates, and the electric generator 3 performs the electric generation. Additionally, this electric-generator rotation axis 3a corresponds to one example of the longitudinal axis of the present invention.

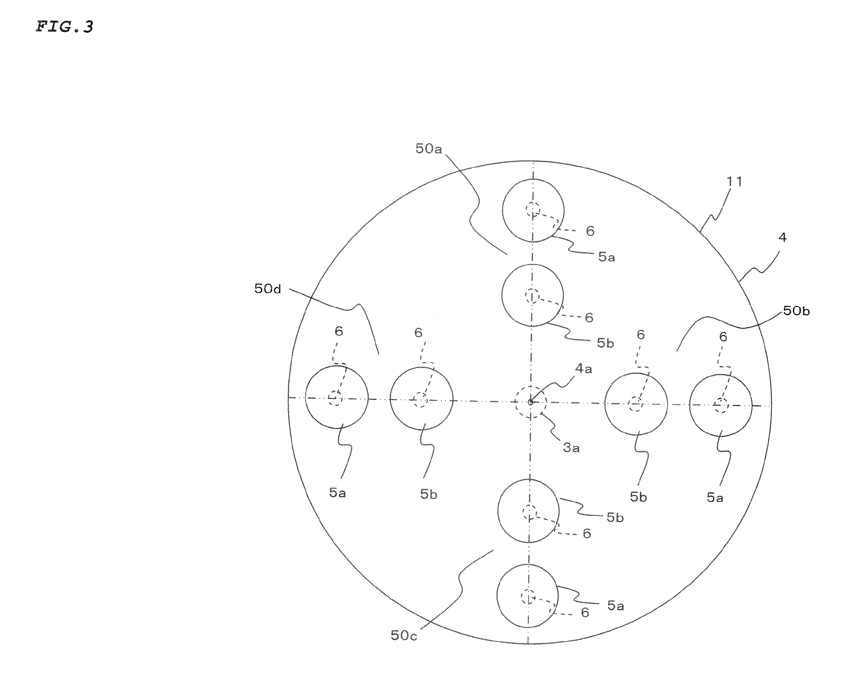

In the above-mentioned windmill part 2, the supporting member 4 of a disk shape is provided which is horizontally arranged, and at the center of the supporting member 4 is fixed the electric-generator rotation axis 3a. In the supporting member 4, a total of the eight barrels 5 of a column shape is arranged. Figure 3 is a plan configuration view that shows the arrangement of the eight barrels 5.

These eight barrels 5 are arranged, with each two being a set, such that their supporting axes 6 become vertical with respect to the surface of the supporting member 4. These two barrels 5 are arranged on a radius (shown with a two-dot chain line) in a direction towards the circumference from the center 4a (the electric-generator rotation axis 3a) of the supporting member 4. That is to say, between the barrel 5a of the barrel set 50, which is arranged on the outside, and the electric-generator rotation axis 3a is then arranged the barrel 5b on the inside. The four barrel sets 50 are arranged around the electric-generator rotation axis 3a at equal intervals, with this barrel 5a, which is arranged on the outside, and the barrel 5b, which is arranged on its inside, being the barrel set 50. And, the four barrels 5b of the four barrel sets 50 are arranged on a concentric circle with the center 4a, and the four barrels 5a are arranged on a concentric circle with the center 4a. Moreover, the eight barrels 5 are by the supporting axes 6, being capable of spinning, pivotally supported on the axis bearing parts 4b formed in the supporting member 4. Additionally, the barrel 5a on the inside and the barrel 5b on the outside are of the same size and, in a case where a distinction between each of them is not necessary, it will be mentioned as the barrel 5.

Next, making reference to Figure 2 descriptions are given regarding one example of the first transmitting mechanism of the invention related to the present invention.

As shown in Figure 2, in the one barrel set 50, on the supporting axis 6 of the barrel 5b on the inside, the first gear 7 is provided being on the lower side of the barrel 5b and, on the supporting axis 6 of the barrel 5a on the outside, the second gear 8 is provided being on the lower side of the barrel 5a. These first gear 7 and second gear 8 are meshing with each other. Moreover, on the supporting member 4 on the outer side of the barrel 5a is arranged the motor 9, and on the driving axis 9a of this motor 9 is provided the driving gear 10. And, the driving gear 10 and the second gear 8 are meshing with each other, and the driving force of the motor 9 is transmitted to the second gear 8 and the first gear 7. That is to say, by allowing the motor 9 to drive, the barrels 5a and 5b then each spin, while the spinning directions of the barrel 5a and barrel 5b become opposite directions. Additionally, the electricity supplying to the motor 9 is performed by a slip ring. Moreover, the four barrel sets 50 are allowed to be of the same configuration. Moreover, so as to cover the first gear 7, the second gear 8 and the motor 9, on the supporting member 4 is provided the cover member 11.

Moreover, comprised are the spinning controlling part 12 that controls the spinning of the barrels 5 by the motor 9, the rotation-number detecting part 16 that detects the rotation number of the electric-generator rotation axis 3a, the switching part 14 that, in order to utilize by external electric power the electric generator 3 as a power source, switches the electric generator 3 to the power source, and the electric-generator controlling part 17 that controls the action of the electric-generator rotation axis 3a by running the switching part 14. Moreover, on the upper side of the cover member 11, the wind velocity meter 15, the temperature meter 18 and the snow sensing meter 19 are provided.

Additionally, one example of the stopping detecting part of the invention related to the present invention corresponds to the rotation-number detecting part 16 of the present embodiment.

Descriptions are given regarding the action of the vertical-axis-type Magnus-system wind power electric generator of the above-mentioned configuration of present Embodiment 1.

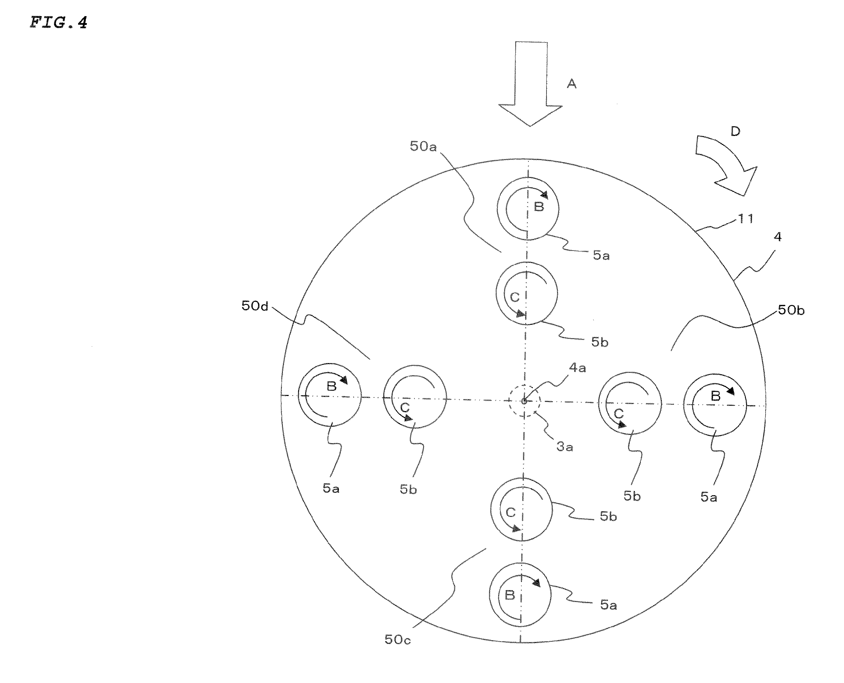

Figure 4 is a plan configuration view for describing the action of the vertical-axis-type Magnus-system wind power electric generator of present Embodiment 1.

As shown in Figure 4, in the vertical-axis-type Magnus-system wind power electric generator of present Embodiment 1, the barrels 5a on the outside spin clockwise (the arrow B) in plan view, and the barrels 5b on the inside are spinning counterclockwise (the arrow C) in plan view. Here, in Figure 4, the direction of the wind is shown by the arrow A, and the barrel sets 50 are consecutively denoted clockwise by 50a on the upwind side, 50b, 50c and 50d.

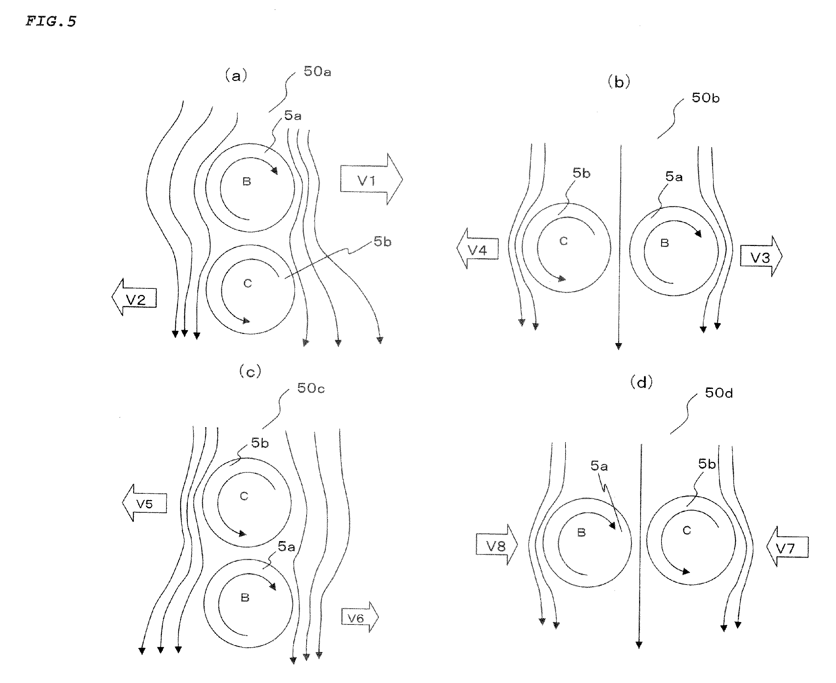

Figures 5(a)-(d) are views that show the relations between the spinning of the barrels 5a and 5b in each of the barrel sets 50a-50b, the wind's direction and the Magnus forces.

As shown in Figure 5(a), on the right side of the barrel 5a of the barrel set 50a on the outside, to the wind velocity adds the spinning velocity of the barrel 5a and the flow velocity becomes fast. On the other hand, on the left side of the barrel 5a, from the wind velocity is reduced the spinning velocity of the barrel 5a and the flow velocity becomes slow. Because of this, on the barrel 5a, the Magnus force (the arrow V1) in the right direction is then generated.

Moreover, on the left side of the barrel 5b of the barrel set 50a on the inside, to the wind velocity adds the spinning velocity of the barrel 5b and the flow velocity becomes fast and, on the right side of the barrel 5b, from the wind velocity is reduced the spinning velocity of the barrel 5b and the flow velocity becomes slow. Because of this, on the barrel 5b, the Magnus force (the arrow V2) in the left direction is then generated.

Here, it is known that the Magnus force is proportional to the wind velocity, the spinning angular velocity of the barrel, and the diameter of the barrel. At the position of the barrel set 50a shown in Figure 5(a), since at least one part of the airflow is shielded by the barrel 5a, because the barrel 5b is arranged downwind of the barrel 5a, for the barrel 5a, the Magnus force generated becomes large in comparison with the barrel 5b that is arranged on its downwind side. Therefore, the resultant force of the Magnus forces, which the two barrels 5a and 5b generate, is in the right direction, and via the supporting member 4 allows the electric-generator rotation axis 3a to rotate clockwise.

Moreover, at the position of the barrel set 50b shown in Figure 5(b), on the barrel 5a is generated the Magnus force (the arrow V3) in the right direction, and on the barrel 5b is generated the Magnus force (the arrow V4) in the left direction but, because the wind velocities of the winds that arrive at the barrel 5a and the barrel 5b are the same, the Magnus forces then cancel each other. Additionally, even if either one Magnus force becomes large by a manufacturing error and so forth, it does not become a force that allows the windmill part 2 to rotate, because being a force along a radial direction.

Moreover, at the position of the barrel set 50c shown in Figure 5(c), on the right side of its barrel 5a, to the wind velocity is added the spinning velocity of the barrel 5a and the flow velocity becomes fast and, on the left side of the barrel 5a, from the wind velocity is reduced the spinning velocity of the barrel 5a and the flow velocity becomes slow. Because of this, on the barrel 5a, the Magnus force (the arrow V6) in the right direction is then generated.

On the other hand, on the right side of the barrel 5b of the barrel set 50c on the inside, from the wind velocity is reduced the spinning velocity of the barrel 5b and the flow velocity becomes slow and, on the left side of the barrel 5b, to the wind velocity is added the spinning velocity of the barrel 5b and the flow velocity becomes fast. Because of this, on the barrel 5b, the Magnus force (the arrow V5) in the left direction is then generated.

Here, at the position of the barrel set 50c shown in Figure 5(c), for the barrel 5b, the Magnus force generated becomes large in comparison with the barrel 5a that is arranged on its downwind side. Because of that, the barrel set 50a then moves in the left direction, and via the supporting member 4 allows the electric-generator rotation axis 3a to rotate clockwise.

Moreover, at the position of the barrel set 50d shown in Figure 5(d), on the barrel 5a is generated the Magnus force (the arrow V8) in the right direction, and on the barrel 5b is generated the Magnus force (the arrow V7) in the left direction but, because the wind velocities of the winds that arrive at the barrel 5a and the barrel 5b are the same, the Magnus forces then cancel each other.

As above, at the position shown in Figure 4, at the position of the barrel set 50a, the force in the right direction is generated and, at the position of the barrel set 50c, the force in the left direction is generated. That is to say, when the barrel set 50 is in a region on the upwind side in comparison with the electric-generator rotation axis 3a, the Magnus force generated on the barrel set 50 is in a direction that allows the supporting member 4 to revolve clockwise around the electric-generator rotation axis 3a and, also when the barrel set 50 is in a region on the downwind side in comparison with the electric-generator rotation axis 3a, a Magnus force works in a direction that allows the supporting member 4 to revolve clockwise around the electric-generator rotation axis 3a. Because of that, the windmill part 2, in plan view, rotates clockwise (see the arrow D).

By this rotation of the windmill part 2, the electric-generator rotation axis 3a rotates, and the electric generation is performed in the electric generator 3. At this time, the rotation number of the electric-generator rotation axis 3a is detected by the rotation-number detecting part 16 and, depending on that rotation number detected, the spinning controlling part 12 properly controls the rotation velocity of the spinning of the barrels 5. Moreover, by the wind velocity detected by the wind velocity meter 15, the rotation velocity of the spinning of the barrels 5 may be controlled.

Next, descriptions are given the controlling in a state where, because the wind is weak or there is no wind, the electric-generator rotation axis 3a is not rotating.

In a case where the wind velocity that is, by the wind velocity meter 15, measured is less than the first predetermined wind velocity, every certain time, the electric-generator controlling part 17 controls the switching part 14 and, utilizing the electric generator 3 as a power source, allows the electric-generator rotation axis 3a to, during a predetermined time, rotate at the first predetermined rotation velocity. Moreover, it is even more preferable that, at the same time, by the spinning controlling part 12, controlling is performed such that the barrels 5 spin at a rotation velocity equal to or more than the first rotation velocity.

By carrying out controlling like this, even in a case where a weak wind of the first predetermined wind velocity or less has blown, the windmill part 2 thus easily rotates, and it is possible to carry out a transition to the electric-generation state.

Additionally, in a case where the wind velocity is less than the second predetermined wind velocity that is smaller than the first predetermined wind velocity, as there is almost no wind, it is concluded that the power becomes vain that allows the electric-generator rotation axis 3a to rotate, and controlling is performed so as not to drive the electric-generator rotation axis 3a. At this time, the spinning of the barrels 5 is also not performed. The above air second predetermined wind velocity is a wind velocity such that the electric-generator rotation axis 3a does not rotate even if the barrels 5 are allowed to spin and, for example, is the wind velocity 1m/s. Moreover, the first predetermined wind velocity is a wind velocity such that the windmill part 2 does not rotate only with the spinning of the barrels 5, but that, by allowing the electric-generator rotation axis 3a to drive as mentioned above at the first rotation velocity, a transition to the electric-generation state is capable of being carried out and, for example is 3m/s.

Next, descriptions are given regarding the controlling on the occasion of snow-coverage/freezing prevention.

In a case where, by the snow sensing meter 19, a snow-coverage is sensed, and besides the wind velocity is capable of electric generation (the electric-generation operation is being performed), the spinning controlling part 12, every certain time, performs controlling so as to allow the barrels 5 to spin at a rotation velocity equal to or more than the second predetermined rotation velocity, for a time determined in advance. Here, the second predetermined rotation velocity is a rotation velocity that is faster than the rotation velocity by the controlling at the time of electric generation. Like this, by allowing the barrels 5 to spin, every certain time, for a time determined in advance at high velocity, it is possible to allow the snow-coverage on the barrels 5 to fall. Additionally, instead of detecting by the wind velocity meter whether the wind velocity is capable of electric generation, by the rotation-number detecting part 16 may be found out that the electric-generator rotation axis 3a is rotating, with electric generation being carried out.

In a case where, by the snow sensing meter 19, a snow-coverage is sensed, and besides the wind velocity is incapable of electric generation (for example, is equal to or less than the above-mentioned second wind velocity), the electric-generator controlling part 17, every certain time, runs the switching part 14 and switches the electric generator 3 to a power source, and performs controlling so as to allow the electric-generator rotation axis 3a to, during a predetermined time, drive at the second rotation velocity. Additionally, at this time, the spinning controlling part 12, every certain time, performs controlling so as to allow the barrels 5 to spin at a rotation velocity equal to or more than the second predetermined rotation velocity, for a time determined in advance.

Moreover, in a case where it is found out that, by the temperature meter 18, the temperature is of possible freezing, and besides the wind velocity is incapable of electric generation (for example, is equal to or less than the above-mentioned second wind velocity), the electric-generator controlling part 17, every certain time, runs the switching part 14 and switches the electric generator 3 to a power source, and performs controlling so as to allow the electric-generator rotation axis 3a to, during a predetermined time, drive at the second rotation velocity. Additionally, at this time, by the spinning controlling part 12, controlling is performed that allows the barrels 5 to spin at a velocity equal to or less than the third predetermined rotation velocity.

The above-mentioned second predetermined rotation velocity of the electric-generator rotation axis 3a is a low velocity. Moreover, the third predetermined rotation velocity of the barrels 5 is a low velocity that is slower than the second predetermined rotation velocity. By allowing, even when electric generation is not performed like this, the electric-generator rotation axis 3a and the barrels 5 to rotate at low velocities, it is possible to prevent freezing.

As above, for the vertical-axis-type Magnus-system wind power electric generator of present Embodiment 1, because the rotation of the barrels 5 in the barrel set 50 on the upwind side and the barrel set 50 on the downwind side is used, the electric-generation efficiency becomes high.

Moreover, because it is sufficient that the spinning directions of the barrels 5a and 5b are always the same rotation directions, it is not necessary to switch, as in Patent Document 3, the spinning directions, and the controlling becomes simple.

In summary, when the two barrels 5a and 5b are in a region on the upwind side in comparison with the electric-generator rotation axis 3a, the Magnus force generated on the barrel 5a is in a direction that allows the supporting member 4 to revolve clockwise around the electric-generator rotation axis 3a, and the Magnus force generated on the barrel 5b is in a direction that allows the supporting member 4 to revolve counterclockwise around the electric-generator rotation axis 3a.

At this time, since at least one part of the airflow is shielded by the barrel 5a, because the barrel 5b is downwind of the barrel 5a, the Magnus force the barrel 5b generates becomes smaller than the Magnus force the barrel 5a generates.

Therefore, the resultant force of the Magnus forces, which the two barrels 5a and 5b generate, via the supporting member 4 allows the electric-generator rotation axis 3a to rotate clockwise,

When the electric-generator rotation axis 3a rotates, and the two barrels 5a and 5b have traveled to a region on the downwind side in comparison with the electric-generator rotation axis 3a, the Magnus force generated on the barrel 5a becomes in a direction that allows the supporting member 4 to revolve counterclockwise, and the Magnus force generated on the barrel 5b becomes in a direction that allows the supporting member 4 to revolve clockwise. At this time, since at least one part of the airflow is shielded by the barrel 5b, because the barrel 5a is downwind of the barrel 5b, the Magnus force the barrel 5a generates becomes smaller than the Magnus force the barrel 5b generates.

Therefore, the resultant force of the Magnus forces, which the two barrels 5a and 5b generate, via the supporting member allows the electric-generator rotation axis to rotate clockwise.

Namely, without shielding the barrel on the downwind side, or allowing the spinning rotation numbers of the barrels to vary individually and besides frequently, it is possible to generate in the electric generator a rotation force in one direction, using the airflows on both upwind and downwind sides of the electric-generator rotation axis.

Moreover, measuring the wind velocity or the rotation number of the electric-generator rotation axis, on the basis of that allowing the spinning rotation numbers of the barrels to change, and regulating the Magnus forces generated on the barrels, it is possible to control the rotation torque of the electric-generator rotation axis.

Specifically, heightening the spinning rotation numbers of the barrels at the time of slight wind, and lowering them at the time of strong wind, the startability becomes excellent, and moreover electric generation becomes capable of being carried out in a broad wind velocity area.

Moreover, it is enough that the spinning rotation number controlling of the barrels 5 of the four barrel sets 50 of present Embodiment 1 is evenly performed.

Moreover, in the configuration of Patent Document 3 that is a prior document, there have been problematic issues as follows. Energy loss becomes large because the spinning rotation numbers of the barrels are allowed to vary individually and besides frequently. Moreover, since there are moments of inertia in the barrels, in a case such that the wind velocity and the wind direction frequently vary, following-up of the controlling of the spinning rotation numbers of the barrels becomes impossible, and there is a possibility that the electric-generation efficiency will deteriorate. The moment of inertia of the barrel becomes an issue particularly in a case where the wind power electric generator is allowed to be increased in size. Since the moment of inertia of the barrel becomes large in proportion to the square of the radius, and the responsiveness of the barrel with respect to the spinning rotation number controlling becomes bad, a motor of high output becomes necessary in order to allow the following-up with respect to the variation of the wind direction or wind velocity, the energy loss becomes large, and also a load imposed on the motor and barrels becomes large as well. Further, since the device becomes complicated with the measuring means of the wind direction, the azimuth angle measuring means and the like being added, the manufacturing cost and the maintenance cost become high.

However, in the vertical-axis-type Magnus-system wind power electric generator of the present embodiment, as above, by devising the arrangement and spinning directions of the barrels, no influence of the wind direction is exerted, the electric-generation efficiency is high, the startability is excellent, the electric generation is capable of being carried out in a broad wind velocity area, the safety with respect to a strong wind is high, the size-increasing is easy, the installation on the rooftop of a building, house or the like is capable of being carried out, or the manufacturing and putting-into-practice at a low cost becomes capable of being carried out.

### (Embodiment 2)

Next, descriptions are given regarding the vertical-axis-type Magnus-system wind power electric generator in Embodiment 2 pertaining to the present invention. The vertical-axis-type Magnus-system wind power electric generator in present Embodiment 2 is the same as that of Embodiment 1 in the basic configuration, but is different for instance in the configuration of the supporting member that supports the barrels with the lower sides, and in the point that the upper-side supporting member is appended that supports the barrels with the upper sides. Because of that, descriptions are given mainly on these points of difference. Additionally, identical symbols have been assigned regarding configurations similar to those of Embodiment 1.

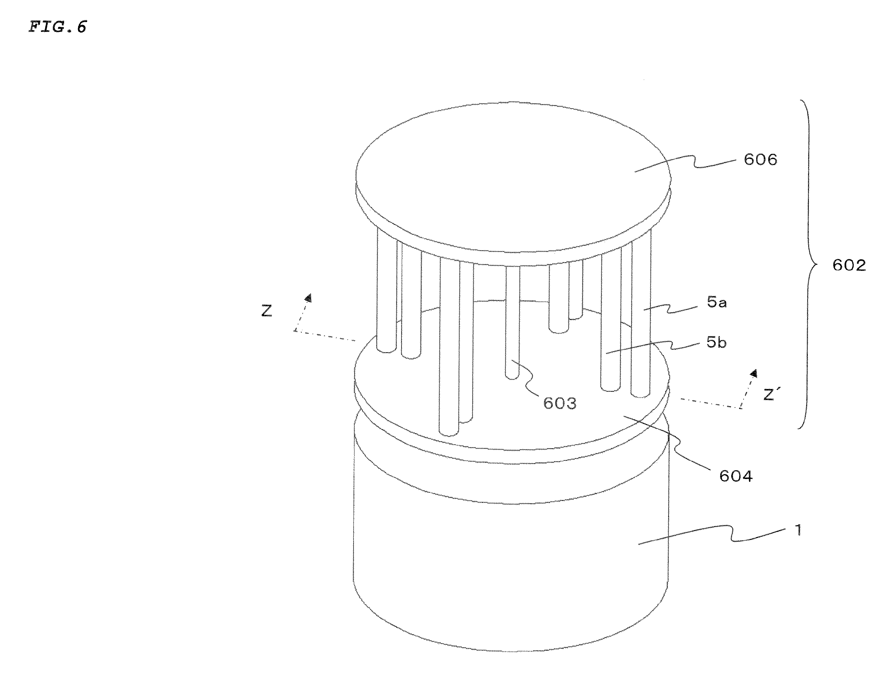

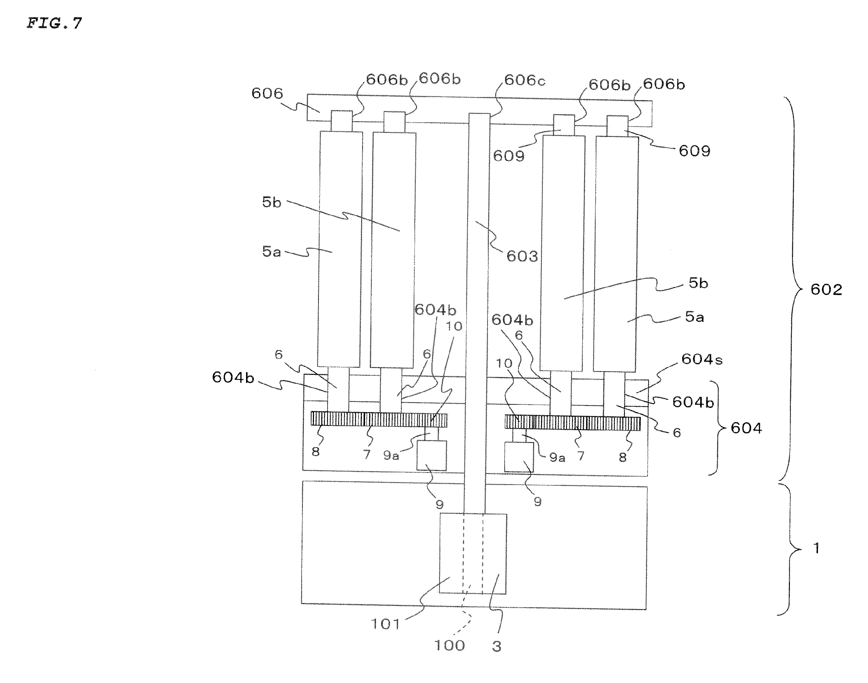

Figure 6 is a perspective configuration view of the vertical-axis-type Magnus-system wind power electric generator of present Embodiment 2. Moreover, Figure 7 is a sectional configuration view between the ZZ' of Figure 6. Additionally, in Figure 6 and Figure 7, the spinning controlling part 12, the rotation-number detecting part 16, the switching part 14, the electric-generator controlling part 17, the wind velocity meter 15, the temperature meter 18, and the snow sensing meter 19 are omitted.

As shown in Figure 6 and Figure 7, in the windmill part 602 of the vertical-axis-type Magnus-system wind power electric generator of present Embodiment 2, the disk-shaped upper-side supporting member 606 for supporting the upper sides of the barrels 5 is provided and, further, at the center of the windmill part 602 is provided the longitudinal axis 603. The lower part of this longitudinal axis 603 is allowed to be the rotator 100, and they are integrally formed in present Embodiment 2 but may be formed separately, being joined via the lower-side supporting member 604. In present Embodiment 2, on the upper sides of the barrels 5 are provided the supporting axes 609 and these supporting axes 609 are, being capable of rotating, fitted to the axis bearing parts 606b of the upper-side supporting member 606. And, the longitudinal axis 603 is also, being capable of rotating, fitted to the axis bearing part 606c formed in the lower-side middle part of the upper-side supporting member 606.

Next, descriptions are given regarding the point that the lower-side supporting member 604 of present Embodiment 2, which is arranged on the lower sides of the barrels 5, is different in structure from the supporting member 4 of Embodiment 1.

As shown in Figure 7, in present Embodiment 2, the lower-side supporting member 604 on the lower side is a hollow and disk-shaped member, and in its ceiling portion 604s are formed the axis bearing parts 604b that support the supporting axes 6. And, at the lower ends of the supporting axes 6 are provided the first gears 7 or second gears 8. That is to say, the supporting axes 6 are, between the barrels 5 and the first gears 7 or second gears 8, supported with the ceiling portion 604s of the lower-side supporting member 604.

Moreover, in Embodiment 1, the driving gear 10 of the motor 9 has been meshing with the second gear 8 but, in present Embodiment 2, the driving gear 10 of the motor 9 is meshing with the first gear 7. By the motor 9 provided in every barrel set 50 rotate the first gear 7 and the second gear 8, and the barrel 5 then rotates.

As above, in present Embodiment 2, by supporting the barrels 5 in the perpendicular direction, the barrels become capable of being stably supported.

Additionally, the upper-side supporting member 606 and longitudinal axis 603 of the configuration of present Embodiment 2 may be applied to Embodiment 1.

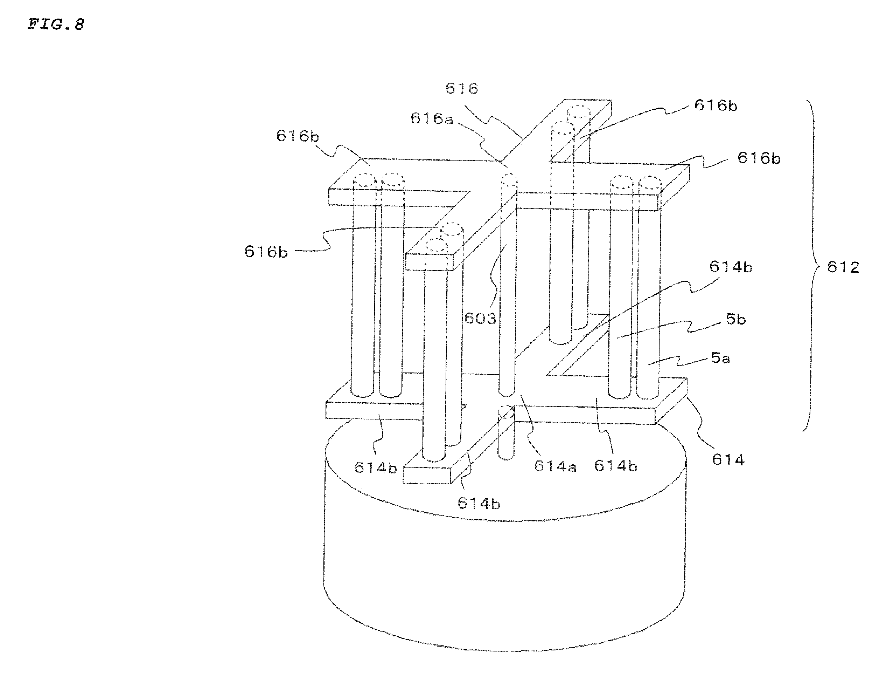

Additionally, in present Embodiment 2, the upper-side supporting member 606 and the lower-side supporting member 604 have been of a disk shape but may be, the shape being not limited to this, of a cross shape. Figure 8 is a perspective configuration view of the vertical-axis-type Magnus-system wind power electric generator of a configuration like that. In the windmill part 612 shown in Figure 8, the lower-side supporting member 614 and the upper-side supporting member 616 are formed to be of a cross shape. The lower-side supporting member 614 and the upper-side supporting member 616 each have the middle parts 614a and 616a, and the arm parts 614b and 616b that have extended in all directions from the middle parts 614a and 616a. The angular degrees that are formed by the adjacent arm parts are allowed to be right angles. And, being sandwiched between the tip ends of the one arm part 614b and the one arm part 616b, the two barrels 5 are supported.

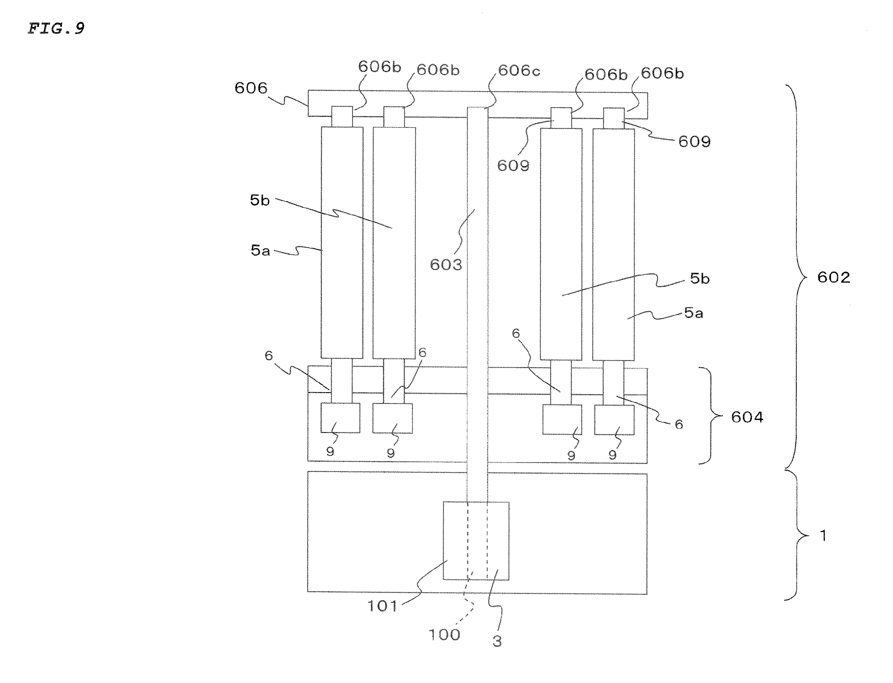

Moreover, in above-mentioned Embodiments 1 and 2, the motor 9 has been provided in every barrel set 50, but the motor 9 may be provided in every barrel 5. Figure 9 is a sectional configuration view viewed from the front of a vertical-axis-type Magnus-system wind power electric generator like this. In the vertical-axis-type Magnus-system wind power electric generator shown in Figure 9, differently from present Embodiment 2, the motor 9 is provided in every supporting axis 6 and, at the supporting axes 6, neither the first gears 7 nor the second gears 8 are provided.

### (Embodiment 3)

Next, descriptions are given regarding the vertical-axis-type Magnus-system wind power electric generator in Embodiment 3 pertaining to the present invention. The vertical-axis-type Magnus-system wind power electric generator of present Embodiment 3 is the same as that of Embodiment 1 in the basic configuration, but is different in the configuration that allows the barrels 5 to spin. Because of that, descriptions are given mainly on these points of difference. Additionally, identical symbols have been assigned regarding configurations similar to those of Embodiment 1.

In Embodiment 1, the motor 9 that allows the barrels 5 to spin is provided in every barrel set 50, and four ones have been arranged in total but, in present Embodiment 3, only one motor is provided, and the configuration is allowed to be that, with this one motor, all the barrels 5 are allowed to spin.

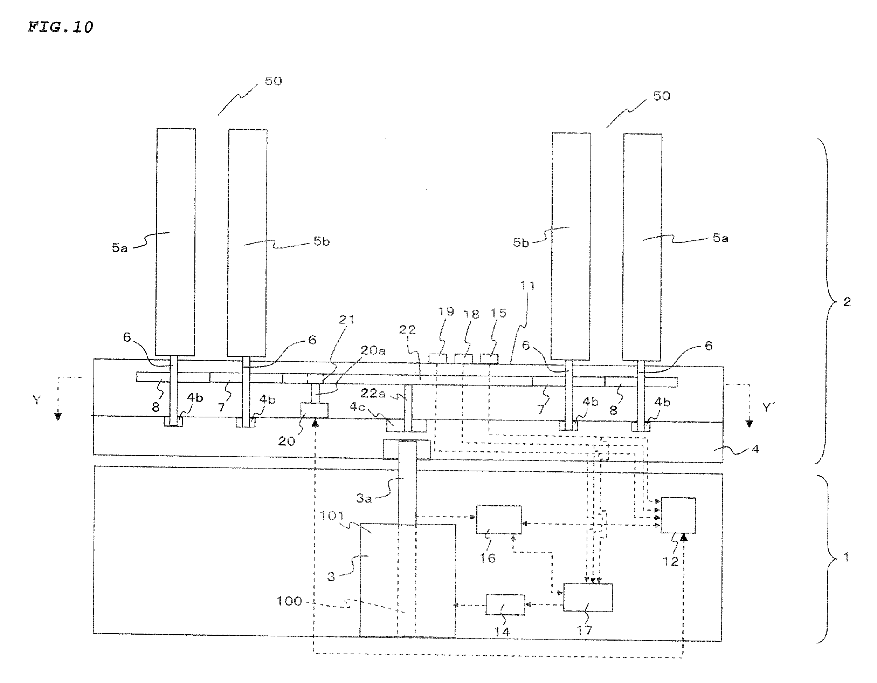

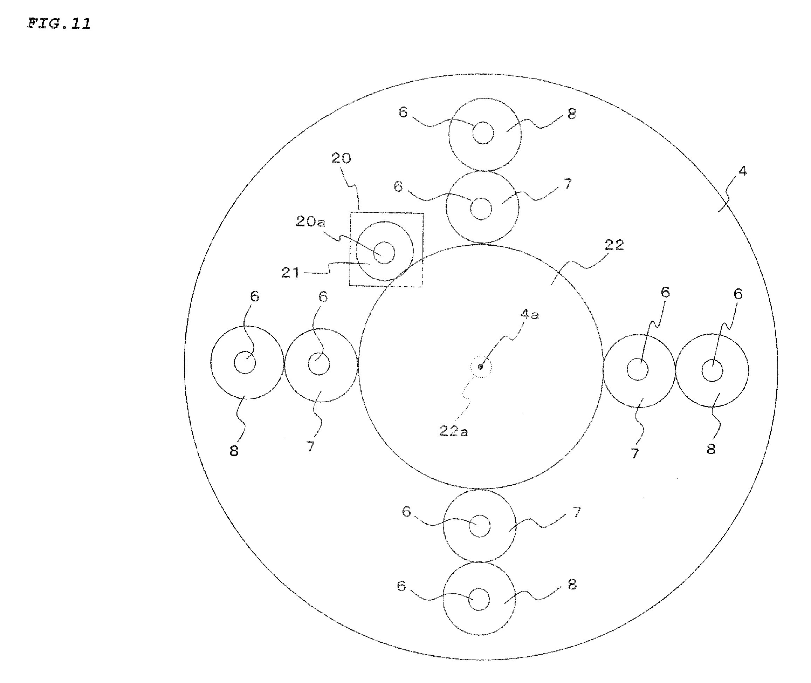

Figure 10 is a front sectional configuration view of the vertical-axis-type Magnus-system wind power electric generator of present Embodiment 3. Figure 11 is a sectional configuration view between the YY' of Figure 10.

As shown in Figure 10 and Figure 11, in the vertical-axis-type Magnus-system wind power electric generator of present Embodiment 3, the motor 9 that corresponds to each of the barrel sets 50 is not provided, and the one motor 20 is provided. The transmitting mechanism from this motor 20 to the barrels 5 corresponds to one example of the second transmitting mechanism of the invention related to the present invention. In what follows, descriptions are given regarding this transmitting mechanism.

At the tip end of the motor axis 20a that is arranged in the vertically upward direction from the motor 20, the driving gear 21 is provided. And, so as to mesh with the plural first gears 7, in the middle of those is arranged the middle gear 22, and this middle gear 22 and the driving gear 21 are meshing with each other. Additionally, the middle gear 22 is, by the supporting axis 22a, being capable of rotating, pivotally supported on the axis bearing part 4b of the supporting member 4, and the supporting axis 22a is provided on the center 4a of the supporting member 4.

By a configuration like this, if the motor 20 is allowed to act, the motor axis 20a rotates, by the driving gear 21 that is fixed to the motor axis 20a the middle gear 22 rotates, and the four first gears 7 rotate. And, the second gear 8 also rotates that is meshing with each of the first gears 7.

In present Embodiment 3, because the configuration is that all the barrels 5 are allowed to rotate with one motor, only the one motor is controlled, so that controlling of the rotation velocities of the spinning of all the barrels 5 becomes capable of being carried out, and the controlling becomes easier.

### (Embodiment 4)

Next, descriptions are given regarding the vertical-axis-type Magnus-system wind power electric generator in Embodiment 4 pertaining to the present invention. The configuration of present Embodiment 4 is that as that of Embodiment 3 all the barrels are allowed to spin by one motor, but is different in the point that the motor 9 is arranged on the pedestal side. Because of that, descriptions are given mainly on these points of difference. Additionally, identical symbols have been assigned regarding configurations similar to those of above-mentioned Embodiments 1 and 2.

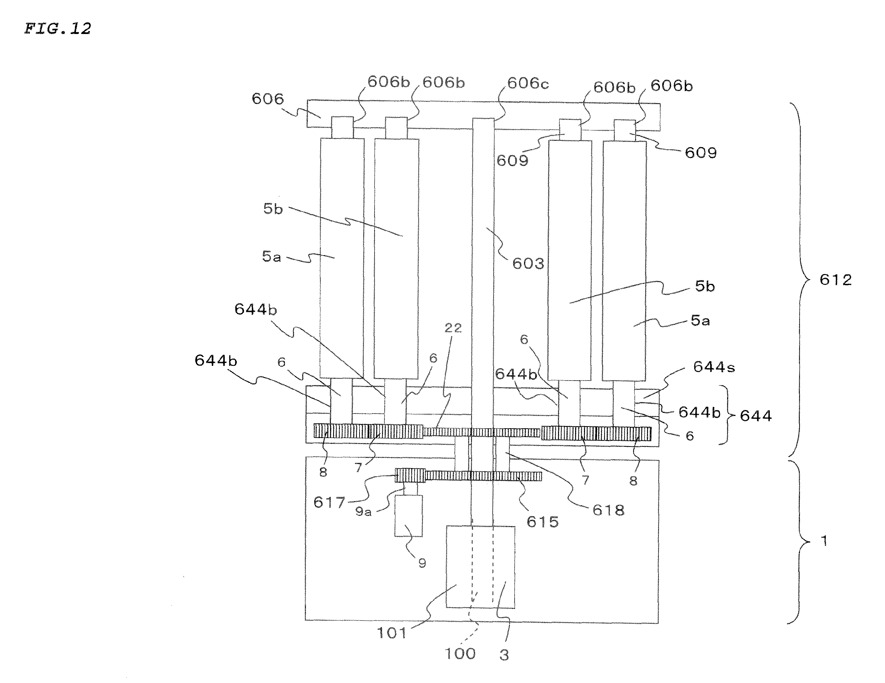

Figure 12 is a sectional configuration view viewed from the front of the vertical-axis-type Magnus-system wind power electric generator of Embodiment 4 pertaining to the present invention. Additionalty, in Figure 12, the spinning controlling part 12, the rotation-number detecting part 16, the switching part 14, the electric-generator controlling part 17, the wind velocity meter 15, the temperature meter 18, and the snow sensing meter 19 are omitted.

As shown in Figure 12, in the windmill part 612 of the vertical-axis-type Magnus-system wind power electric generator of present Embodiment 4, the upper-side supporting member 606, the lower-side supporting member 644, and the longitudinal axis 603 are provided as the windmill part 602 of the configuration of Embodiment 2 and, with the axis bearing parts 644b formed in the ceiling portion 644s of the lower-side supporting member 644, the supporting axes 6 are supported. And, similarly to Embodiment 3, within the lower-side supporting member 644 is arranged the middle gear 22. Within the through hole formed in the middle of this middle gear 22 is arranged the longitudinal axis 603, and the middle gear 22 is not fixed to the longitudinal axis 603, and is configured so as to freely rotate with respect to the longitudinal axis 603.

Moreover, within the pedestal 1, coaxially with the middle gear 22 is provided the in-pedestal middle gear 615. Similarly to the middle gear 22, this in-pedestal middle gear 615, the configuration of which is also that within the through hole formed in its middle is arranged the longitudinal axis 603, is not fixed to the longitudinal axis 603, and is configured so as to freely rotate with respect to the longitudinal axis 603. And, the in-pedestal middle gear 615 and the middle gear 22 are joined by the joining member 618, and rotate at the same time. So as to mesh with the in-pedestal middle gear 615 that has joined with the middle gear 22 like this is provided the driving gear 617, and this driving gear 617 is fixed to the driving axis 9a of the motor 9.

Making a configuration as above, because it is possible to transmit, via the driving gear 617 and the in-pedestal middle gear 615, the rotation of the motor 9 to the middle gear 22, similarly to above-mentioned Embodiment 3, all the barrels become capable of being allowed to spin with one motor.

Moreover, as in present Embodiment 4, by arranging the motor 9 on the pedestal 1 side, because the slip ring becomes unnecessary, it is possible to allow the electrical connection reliability to improve.

Moreover, because in the configurations of Embodiments 3 and 4 only one motor needs to be provided, they are useful with respect to a small-sized wind power electric generator. Additionally, in a case of a large size, it is more preferable that in every barrel set 50 is provided the motor 9.

### (Embodiment 5)

Next, descriptions are given regarding the vertical-axis-type Magnus-system wind power electric generator in Embodiment 5 pertaining to the present invention. The vertical-axis-type Magnus-system wind power electric generator in present Embodiment 5 is the same as that of Embodiment 4 in the basic configuration, but is different in the point that, in present Embodiment 5, differently from Embodiment 4, an electric generator of an outer-rotor type is utilized. Because of that, descriptions are given mainly on these points of difference.

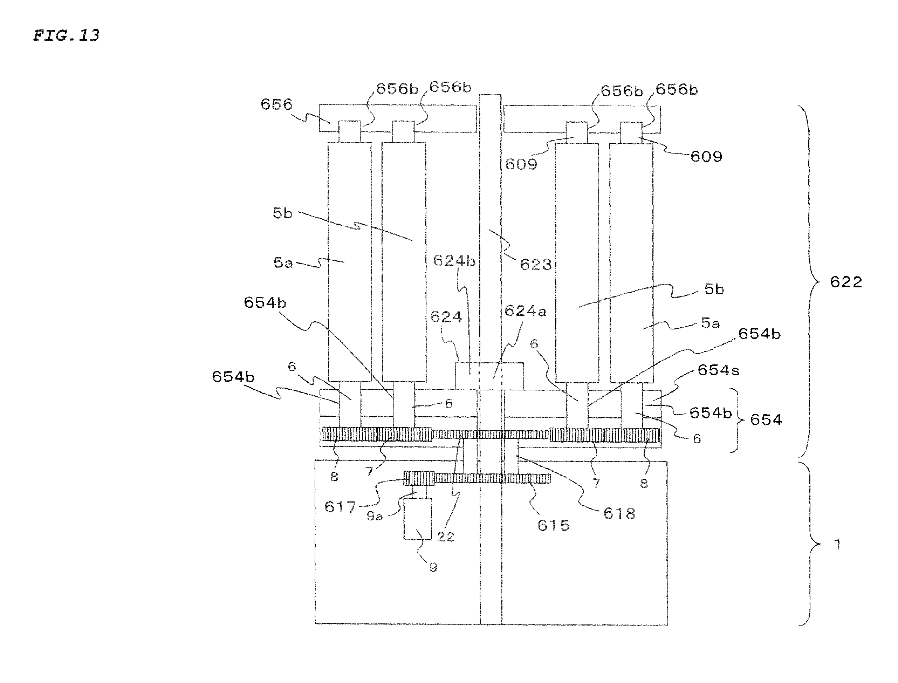

Figure 13 is a sectional configuration view viewed from the front of the vertical-axis-type Magnus-system wind power electric generator of present Embodiment 5. As shown in Figure 13, in the vertical-axis-type Magnus-system wind power electric generator of present Embodiment 5, in the middle of the windmill part 622 is provided the longitudinal axis 623. This longitudinal axis 623 is fixed to the pedestal 1, and the windmill part 622 is configured so as to freely rotate with respect to the longitudinal axis 623. Because of that, in present Embodiment 5, the lower-side supporting member 654 and the upper-side supporting member 656 are provided that are configured so as to freely rotate with respect to the longitudinal axis 623. In this upper-side supporting member 656, the axis bearing parts 656b are formed that support the supporting axes 609 on the upper side, and the lower-side supporting member 654 supports, with the axis bearing parts 654b provided in its ceiling portion 654s, the supporting axes 6 on the lower side.

Moreover, the electric generator 624 is arranged on the upper side of the lower-side supporting member 654. This electric generator 624 is an electric generator of an outer-rotor type that has the stator 624a provided in the middle, and the rotator 624b provided in its surrounding. The stator 624a is configured by one part of the longitudinal axis 623, and the rotator 624b is fixed on the lower-side supporting member 614.

That is to say, in the electric generator of the present embodiment, if the windmill part 622 rotates, with respect to the longitudinal axis 623 that is fixed, along with the rotation of the windmill part 622, the rotator 624b of the electric generator 624 rotates, and the electric generation is performed.

Like this, an electric generator of an outer-rotor type may be utilized.

Additionally, in Figure 13, the spinning controlling part 12, the rotation-number detecting part 16, the switching part 14, the electric-generator controlling part 17, the wind velocity meter 15, the temperature meter 18, and the snow sensing meter 19 are omitted but, in the case of the present embodiment, the rotation-number detecting part detects the rotation of the rotator 624b, and the electric-generator controlling part, by allowing the switching part 14 to act, then allows the rotator 624b to move. Moreover, in a case where, because the wind is weak or there is no wind, the windmill part 622 is not rotating, controlling similar to that of Embodiment 1 is performed but, instead of allowing the electric-generator rotation axis 3a, that is to say the rotator 100 to rotate, in the present embodiment, the rotator 624b is then allowed to rotate.

### (Embodiment 6)

Next, descriptions are given regarding the vertical-axis-type Magnus-system wind power electric generator in Embodiment 6 pertaining to the present invention. The vertical-axis-type Magnus-system wind power electric generator in present Embodiment 6 is the same as that of Embodiment 1 in the basic configuration, but is different in the controlling method. Because of that, descriptions are given mainly on these points of difference. Additionally, identical symbols have been assigned regarding configurations similar to those of Embodiment 1.

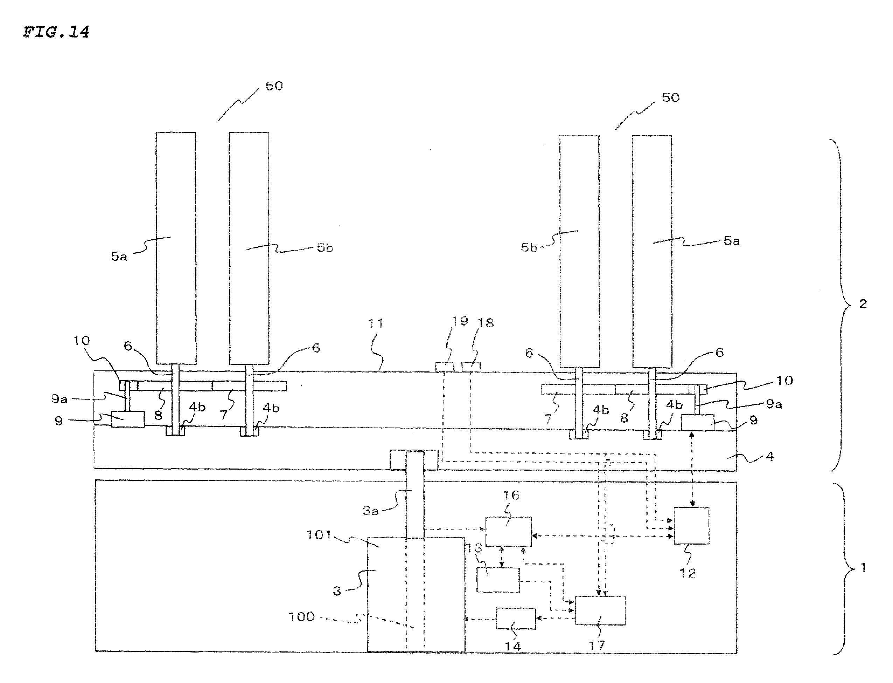

Figure 14 is a sectional configuration view viewed from the front of the vertical-axis-type Magnus-system wind power electric generator of present Embodiment 6.

As shown in Figure 14, in present Embodiment 6, the wind velocity meter 15 is not provided, and the stopping-time detecting part 13 is provided that detects, based on the rotation number detected with the rotation-number detecting part 16, the time for which the electric-generator rotation axis 3a is stopping.

Next, descriptions are given regarding the controlling of present Embodiment 6 in a state where, because the wind is weak or there is no wind, the electric-generator rotation axis 3a is not rotating.

In a case where the stopping time of the electric-generator rotation axis 3a, which has been detected by the stopping-time detecting part 13, is equal to or more than a predetermined time, the electric-generator controlling part 17, every certain time, runs the switching part 14 and switches the electric generator 3 to a power source, and performs controlling so as to allow the electric-generator rotation axis 3a to, during a predetermined time, drive at the first predetermined rotation velocity. Additionally, it is even more preferable that, at this time, by the spinning controlling part 12, controlling is performed that allows the barrels 5 to spin at a velocity equal to or more than the first predetermined rotation velocity.

By carrying out controlling like this, even in a case where a weak wind has blown, the windmill part 2 thus easily rotates, and heightens the possibility that it is possible to carry out a transition to the electric-generation state.

Next, descriptions are given regarding the controlling on the occasion of snow-coverage/freezing prevention.

In a case where, by the snow sensing meter 19, a snow-coverage is sensed, and besides by the rotation-number detecting part 16 has been found out the rotation of the electric-generator rotation axis 3a, that is to say in a case where the electric-generation operation is being performed, the spinning controlling part 12, every certain time, performs controlling so as to allow the barrels 5 to spin at a rotation velocity equal to or more than the second predetermined rotation velocity, for a time determined in advance. Here, the second predetermined rotation velocity is a rotation velocity that is faster than the rotation velocity by the controlling at the time of electric generation.

Like this, by carrying out rotation at high velocity, every certain time, at a fast rotation velocity for a time determined in advance, it is possible to allow the snow-coverage on the barrels 5 to fall.

In a case where, by the snow sensing meter 19, a snow-coverage is sensed, and besides the stopping time of the electric-generator rotation axis 3a is equal to or more than a predetermined time, the electric-generator controlling part 17, every certain time, runs the switching part 14 and switches the electric generator 3 to a power source, and performs controlling so as to allow the electric-generator rotation axis 3a to, during a predetermined time, drive at the second rotation velocity. Additionally, at this time, the spinning controlling part 12, every certain time, performs controlling so as to allow the barrels 5 to spin at a rotation velocity equal to or more than the second predetermined rotation velocity, for a time determined in advance.

Moreover, in a case where it is found out that, by the temperature meter 18, the temperature is of possible freezing, and besides the stopping time of the electric-generator rotation axis 3a is equal to or more than a predetermined time, the electric-generator controlling part 17, every certain time, runs the switching part 14 and switches the electric generator 3 to a power source, and performs controlling so as to allow the electric-generator rotation axis 3a to, during a predetermined time, drive at the second predetermined rotation velocity. Additionally, at this time, by the spinning controlling part 12, controlling is performed that allows the barrels 5 to spin at a velocity equal to or less than the third predetermined rotation velocity.

The above-mentioned second predetermined rotation velocity of the electric-generator rotation axis 3a is a low velocity, and the third predetermined rotation velocity of the barrels 5 is a low velocity that is slower than the second predetermined rotation velocity.

By allowing, even when electric generation is not performed like this, the electric-generator rotation axis 3a and the barrels 5 to rotate at low velocities, it is possible to prevent freezing.

Additionally, the temperature meter 18 and the snow sensing meter 19, in Embodiments 1-6, have been provided, but need not be provided in a district where there is neither snow-coverage nor freezing.

Moreover, by a manual switch or remote manipulation, the actions for the snow-coverage prevention or freezing prevention may be switched to be turned on and off.

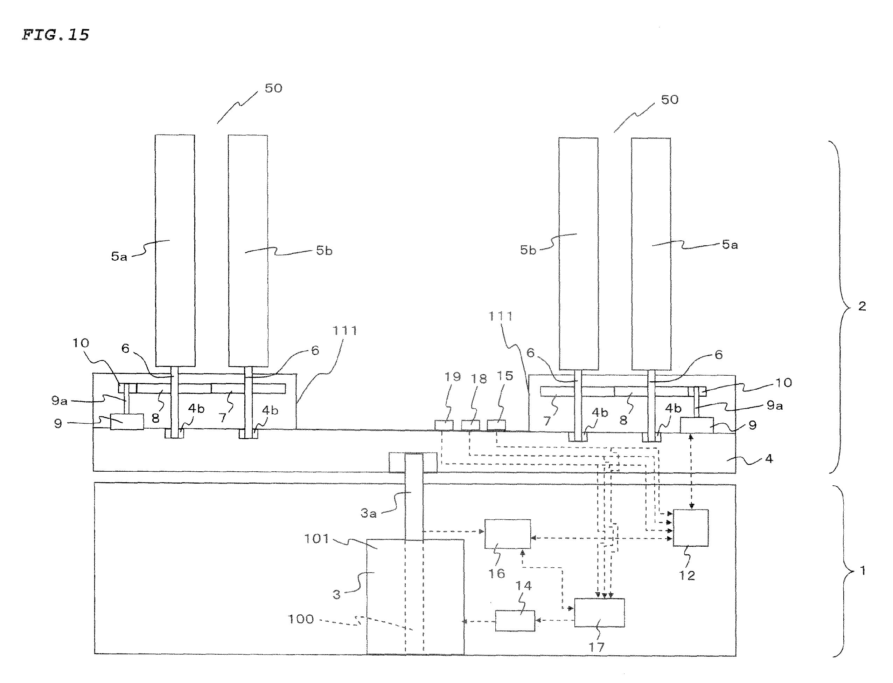

Moreover, in Embodiments 1, 3 and 6, the whole of the upper side of the supporting member 4 has been covered by the cover member 11 but, as in the variant example of Embodiment 1 shown in Figure 15, so as to at least cover only the downward first gears 7, second gears 8 and motors 9 of the barrel sets 50 may be provided the cover members 111.

Moreover, in present Embodiment 6, because the electric generator 3 of an inner-rotor type is utilized, the stopping time of the electric-generator rotation axis 3a, that is to say the rotator 100 is being detected, but it is enough that, in a case where the electric generator 624 of an outer-rotor type has been utilized as in Embodiment 5, the stopping time of the rotator 624b is detected to perform controlling similar to the above-mentioned.

### (Embodiment 7)

Next, descriptions are given regarding the vertical-axis-type Magnus-system wind power electric generator in Embodiment 7 pertaining to the present invention. The vertical-axis-type Magnus-system wind power electric generator in present Embodiment 7 is the same as that of Embodiment 1 in the basic configuration, but differs in the shape of the supporting member, and differs in the point that it is configured so as to be capable of expanding and contracting. Because of that, descriptions are given mainly on these points of difference. Additionally, identical symbols have been assigned regarding configurations similar to those of Embodiment 1.

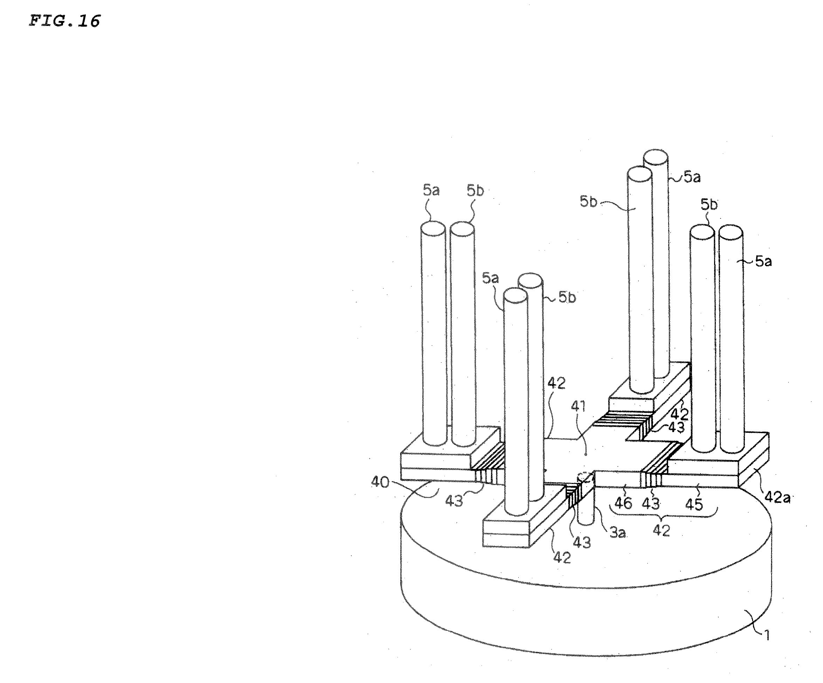

Figure 16 is a perspective configuration view of the vertical-axis-type Magnus-system wind power electric generator of present Embodiment 7. As shown in Figure 16, the supporting member 40 of present Embodiment 7 is of a cross shape in plan view, from the middle part 41 to which the electric-generator rotation axis 3a is fixed, so as to protrude in all directions are extending the arm parts 42, and at the tip ends of those are arranged the barrel sets 50 (the barrels 5a and 5b). And, the angular degrees the adjacent arm parts 42 form are allowed to be right angles.

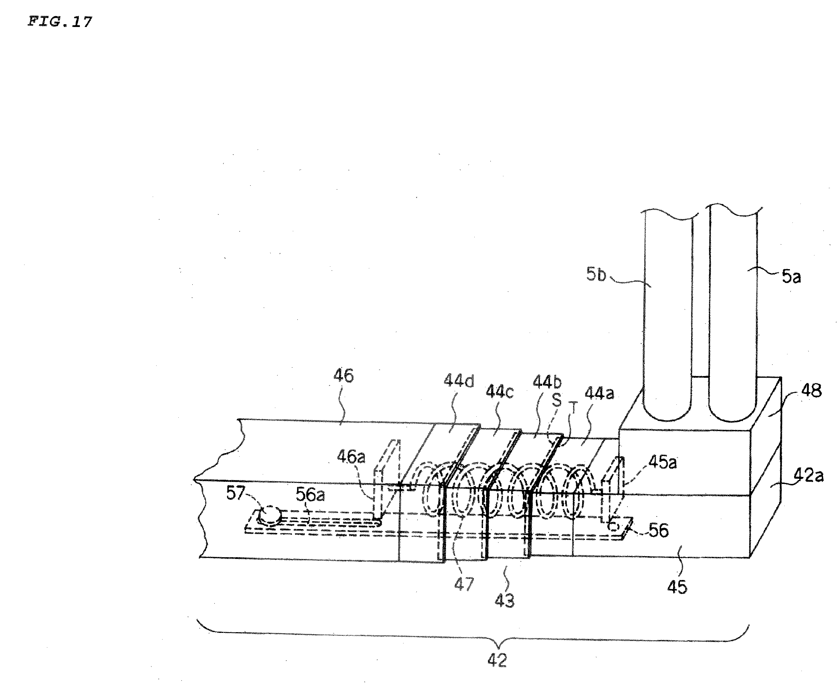

Moreover, between the electric-generator rotation axis 3a and the barrel sets 50 of the arm parts 42, the expanding-and-contracting parts 43 are formed. Figure 17 is an enlarged configuration view of a neighborhood of the expanding-and-contracting part 43. Additionally, in Figure 17, the state is shown where the expanding-and-contracting part 43 has expanded.

As shown in Figure 17, the expanding-and-contracting part 43 has the multiple frame-shaped members 44. In the present embodiment, the number of the frame-shaped members is allowed to be four, and the symbols 44a, 44b, 44c and 44d are consecutively assigned from the side of the tip end 42a of the arm part 42. These frame-shaped members 44a, 44b, 44c and 44d consecutively become large in size, and are configured such that the frame-shaped member 44a is inserted in the adjoining frame-shaped member 44b, the frame-shaped member 44b is inserted in the adjoining frame-shaped member 44c, and the frame-shaped member 44c is inserted in the adjoining frame-shaped member 44d. Moreover, even in a case where the frame-shaped member 44a has been drawn out from the frame-shaped member 44b, the edge part S of the frame-shaped member 44a on the side of the middle part 41 is formed so as to be engaged with the edge part T of the frame-shaped member 44b on the side of the tip end 42a, and they are configured so as not to be alienated. The same is also true between other frame-shaped members.

And, the frame-shaped member 44a is fixed to the outside portion 45 on the side of the tip end 42a in comparison with the expanding-and-contracting part 43 of the arm part 42, and the frame-shaped member 44d is fixed to the inside portion 46 on the side of the middle part 41 in comparison with the expanding-and-contracting part 43 of the arm part 42. In these outside portion 45 and inside portion 46, in respective internal parts are formed the protuberant parts 45a and 46a, and to the protuberant parts 45a and 46a is fixed the spring member 47. The spring member 47, both ends of which are fixed to the protuberant parts 45a and 46a respectively, carries out energization such that the expanding-and-contracting part 43 contracts.

Moreover, in order to keep the outside portion 45 horizontal, the reinforcing member 56 that joins the outside portion 45 and the inside portion 46 is provided in the internal part of the arm part 42. This reinforcing member 56 is a plate-shaped member, and the one end is fixed to the outside portion 45. Moreover, at the other end, the longhole 56a is formed, and the pin 57 is provided that fits to that longhole 56a and is fixed to the inside portion 46. This pin 57 is, so as not to fall out from the longhole 56a, formed such that the upper end is large. That is to say, the reinforcing member 56 is configured so as to be capable of sliding.

Moreover, on the upper side of the outside portion 45 of the arm part 42, the cover member 48 is provided that covers the first gear 7, second gear 8, motor 9, driving gear 10 and so forth described in Embodiment 1. And, on that are arranged the barrels 5a and 5b.

Next, descriptions are given regarding the action of the vertical-axis-type Magnus-system wind power electric generator of present Embodiment 7.

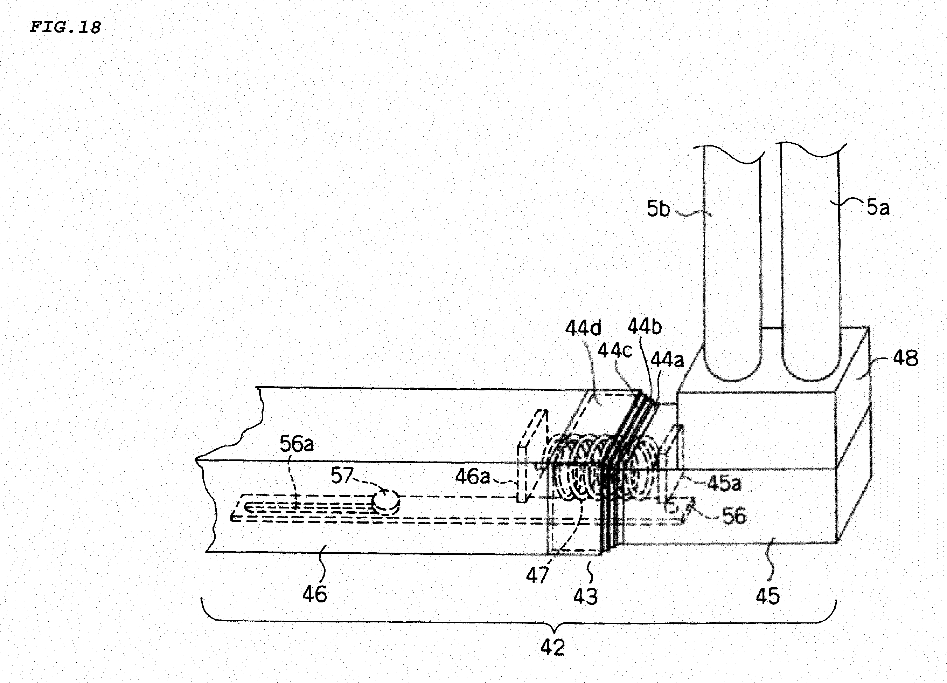

In a state before the electric-generator rotation axis 3a rotating, as shown in Figure 18, by the energization force of the spring member 47, the frame-shaped member 44 on the side of the tip end 42a becomes, fitting to its adjoining frame-shaped member 44 on the middle side, in a state of having contracted. If detailed descriptions are given, the state has become that the frame-shaped member 44a has fitted to the frame-shaped member 44b, that the frame-shaped member 44b has fitted to the frame-shaped member 44c, and that the frame-shaped member 44c has fitted to the frame-shaped member 44d.

And, if by wind rotates the windmill part 2, by the centrifugal force imposed on the barrel set 50 and the outside portion 45, opposing the energization force of the spring member 47, gradually expands the expanding-and-contracting part 43 (see Figure 17). Additionally, the reinforcing member 56 then slides accompanying the traveling of the outside portion 45 to the outside.

In the present embodiment, in a state before initiating electric generation, because the arm part 42 becomes in a state of having contracted, the rotation radius is small, rotation is carried out even with a weak wind velocity, and the electric generation is thus easily carried out.

Additionally, in present Embodiment 7, the expanding-and-contracting part 43 has been formed with four frame-shaped members, but is not limited to this.

Additionally, between the barrels 5a and 5b of above-mentioned Embodiments 1-7, the airflow shielding plate 49 may be provided that corresponds to one example of the airflow shielding means of the present invention. Figure 19(a) is a perspective configuration view shows, citing Embodiment 1 as an example, the airflow shielding plate 49 that is provided between the barrel 5a and the barrel 5b. Figure 19(b) is a view that shows the relation between the spinning of the barrels 5a and 5b of the barrel set 50a and the Magnus forces that arise by the wind's direction. As has been described in Figure 4, because the Magnus force (V1) of the barrel 5a and the Magnus force (V2) that arises on the barrel 5b are in opposite directions, the force for rotation becomes weak by the Magnus force of the barrel 5b. However, because it is possible to weaken, by providing the airflow shielding plate 49 as shown in Figure 19, the Magnus force (V2) that arises on the barrel 5b, the force for rotation becomes strong, and it is possible to more improve the energy efficiency. The same is also true in a case where the barrel set 50 travels to the downwind side with reference to the electric-generator rotation axis 3a.

Additionally, it is even more preferable that, on the surface of this airflow shielding plate 49, a shape so as to allow the airflow to diffuse or disperse is formed and, for example, it is enough that the concave part 49a as shown in Figure 19(c) is formed.

Further, it is even more preferable that, on the side end face 49b of the airflow shielding plate 49, a shape so as to allow the airflow to diffuse or disperse is formed. For example, it is enough that the fiber-shaped protruding parts 49c as shown in Figure 19(d) are formed. The plural protruding parts 49c are obliquely formed with respect to the horizontal direction such that the intervals between the adjacent protruding parts 49c become large or small. Specifically, the most upward protruding part 49c of Figure 19(d) is obliquely formed such that in comparison with the paper-face front becomes low the depth side, the second protruding part 49c on its lower side is obliquely formed such that in comparison with the paper-face front becomes high the depth side, and the interval between these two protruding parts 49c is becoming small as going in the paper-face depth direction. On the other hand, the third protruding part 49c is obliquely formed such that in comparison with the paper-face front becomes low the depth side, and the interval between the two second and third protruding parts 49c is becoming large as going in the paper-face depth direction. Like this are alternately formed a shape the width of which becomes small as going in the paper-face depth direction, and a shape the width of which becomes large as going in the paper-face depth direction. Descriptions have been given regarding the airflow shielding plate 49 as one example of the airflow shielding means of the present invention, but it need not be, as mentioned above, plate-shaped.

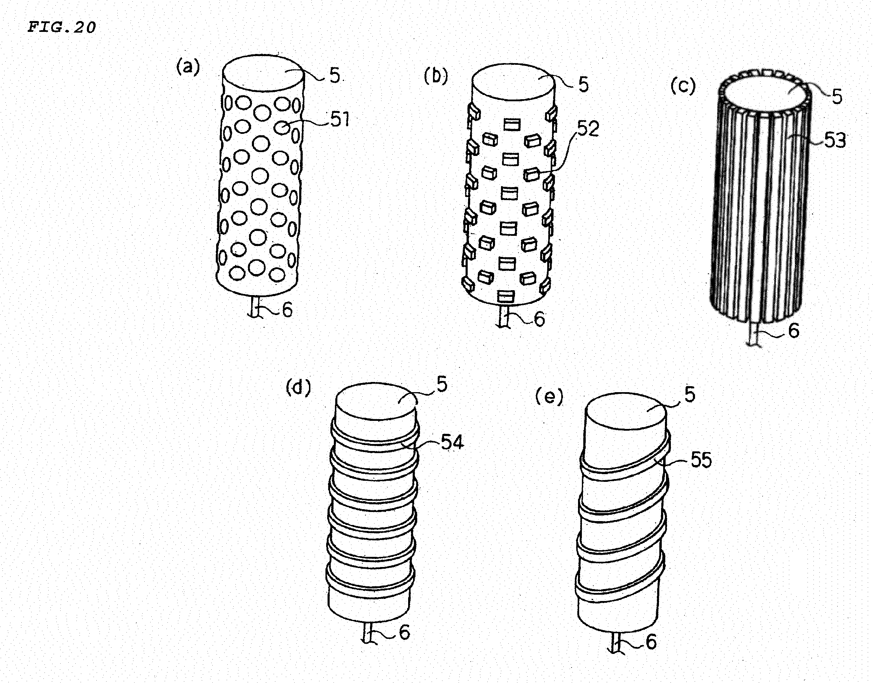

Moreover, on the surface of the barrel 5 of above-mentioned Embodiments 1-7, as shown in Figure 20(a) may be formed the dimple-shaped depressions 51. Moreover, as shown in Figure 20(b) may be formed the protuberances 52. Further, as shown in Figure 20(c), on the surface of the barrel 5 may be formed the ribs 53 that are parallel with respect to the supporting axis 6. Moreover, not limited to the ribs that are parallel with respect to the supporting axis 6, as shown in Figure 20(d), on the surface of the barrel 5, the ribs 54 may be formed that are vertical with respect to the supporting axis 6. Moreover, as shown in Figure 20(e), the helix-shaped ribs 55 may be formed.

By forming the surface of the barrel 5 like these, the flow of the airflow becomes good, it is possible to obtain with a little spinning a large effect of the Magnus force, and an effect of allowing the rotation noise of the barrel 5 to be small is also obtained.

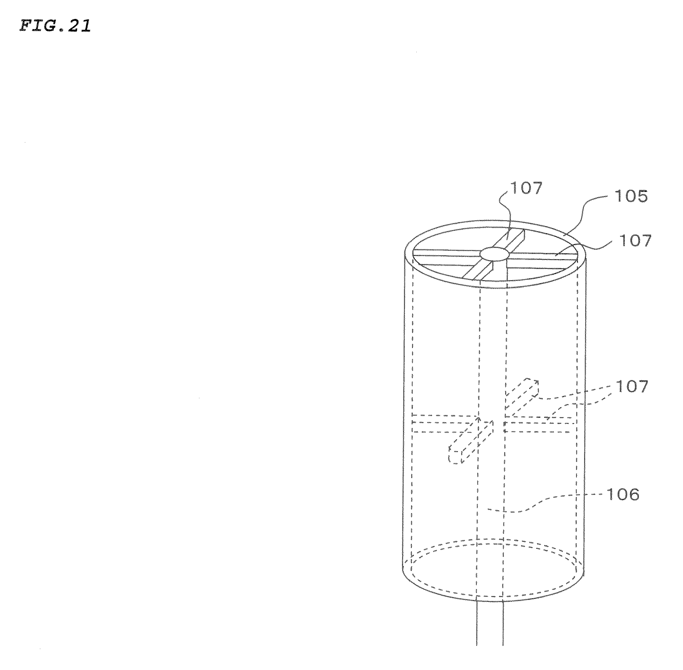

Moreover, the barrel 5 of Embodiments 1-7 may be hollow. Figure 21 is a view that shows the configuration of the barrel 105 of a configuration like this. The barrel 105 shown in Figure 21 is hollow, and at its center is arranged the supporting axis 106. This supporting axis 106 and the barrel 105 are joined by the supporting arms 107.

By making a configuration of being hollow like this, it is possible to design light-weighting of the barrel 5, and it is possible to allow the torque pertaining to the spinning to be small.

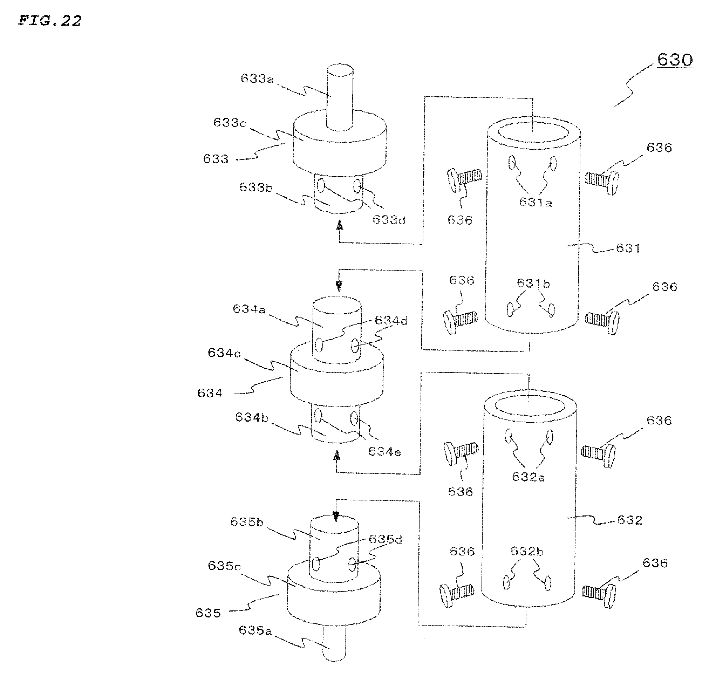

Moreover, in above-mentioned Embodiments 1-7, the barrel 5 is one member but, for instance in a case where the length is long, may be configured to be divided in consideration of portability. Figure 22 is an exploded perspective configuration view of the barrel 630 like this. As shown in Figure 22, the barrel 630 has the two cylinder parts 631 and 632 consecutively arranged from above, the upper-supporting-axis part 633 that is arranged on the upper side of the cylinder part 631, the connecting part 634 that carries out connecting between the cylinder part 631 and the cylinder part 632, and the lower-supporting-axis part 635 that is arranged on the lower side of the cylinder part 632. These cylinder parts 631 and 632 are hollow, and at four spots for the upper and lower ones each are formed the through holes 631 a, 631 b, 632a and 632b for screw.

Moreover, the upper-supporting-axis part 633 has the upper supporting axis 633a, the fitting part 633b that fits to the cylinder part 631, and the column part 633c formed between the upper supporting axis 633a and the fitting part 633b, and in the fitting part 633b are formed the four screw holes 633d. The connecting part 634 has the fitting part 634a that fits to the inside of the cylinder part 631, the fitting part 634b that fits to the inside of the cylinder part 632, and the column part 634c formed between the fitting part 634a and the fitting part 634b. And, in the fitting part 634a, the four screw holes 634d are formed and, in the fitting part 634b, the four screw holes 634e are formed. The lower-supporting-axis part 635 has the lower supporting axis 635a, the fitting part 635b that fits to the inside of the cylinder part 632, and the column part 635c provided between the lower supporting axis 635a and the fitting part 635b, and in the fitting part 635b are formed the four screw holes 635d. These cylinder parts 631 and 632, and the column parts 633c, 634c and 635c are all of the same diameter. Additionally, one example of the barrel portions of the present invention corresponds to the cylinder parts 631 and 632, or the column parts 633c, 634c and 635c.

And, by fitting the fitting part 633b of the upper-supporting-axis part 633 and the fitting part 634a of the connecting part 634 into the inside of the cylinder part 631, fitting the fitting part 634b of the connecting part 634 and the fitting part 635b of the lower-supporting-axis part 635 into the inside of the cylinder part 632, adjusting with the screw holes 633d the through holes 631 a, adjusting with the screw holes 634d the through holes 631 b, adjusting with the screw holes 634e the through holes 632a, adjusting with the screw holes 635d the through holes 632b, and fastening each of them with the screw 636, the barrel 630 is assembled. Additionally, the upper supporting axis 633a corresponds to the supporting axis 609 on the upper side of the barrel 5 of Figure 7, and the lower supporting axis 635a corresponds to the supporting axis 6 of the barrel 5 of Figure 7.

Additionally, in Figure 22, the above-mentioned through holes for screw, the above-mentioned screw holes, and the above-mentioned screws at two spots for the back side are omitted.

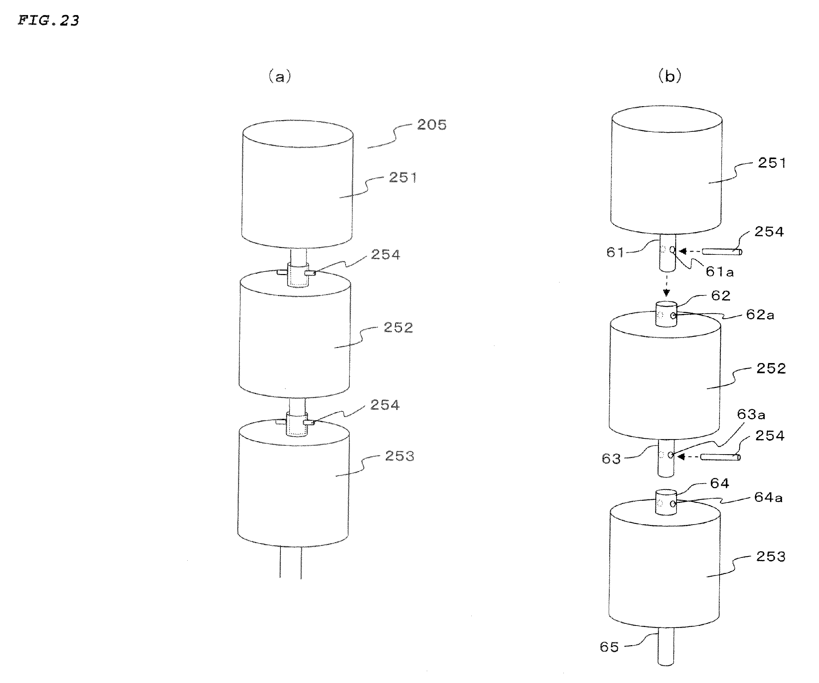

Moreover, as one example of the barrel capable of being divided, the configurations shown in Figure 23(a) and Figure 23(b) may be utilized. Figure 23(a) is a perspective configuration view of the barrel 205 like this. Figure 23(b) is a perspective configuration view that shows the state where the barrel 205 has been divided. As shown in Figures 23(a) and (b), the barrel 205 is configured by the plural barrel parts 251, 252 and 253 consecutively arranged from above. The barrel part 251 positioned at the uppermost part has the joining axis 61 on its lower side, and the barrel part 252 positioned at the middle has the joining axis 62 provided on its upper side, and the joining axis 63 provided on its lower side. The barrel part 253 positioned at the lowermost part has the joining axis 64 provided on its upper side, and the supporting axis 65 provided on its lower side. And, the joining axes 61, 62, 63 and 64 are hollow, and the through holes 61a, 62a, 63a and 64a are formed respectively.

As shown in Figures 23(a) and (b), the joining axis 61 of the barrel part 251 is fitted to the inside of the joining axis 62 of the barrel part 252 and, by putting, in the state where the positions of the through hole 61a and the through hole 62a have been adjusted, the pin 254 in the through holes 61a and 62a, the barrel part 251 and the barrel part 252 are fixed. Similarly, the joining axis 63 of the barrel part 252 is fitted to the inside of the joining axis 64 of the barrel part 253 and, by putting, in the state where the positions of the through hole 63a and the through hole 64a have been adjusted, the pin 254 in the through holes 63a and 64a, the barrel part 252 and the barrel part 253 are fixed. Additionally, the first gear 7 and the second gear 8 are then arranged on the supporting axis 65.

By making a configuration like this, it becomes convenient for portability. Additionally, in Figure 22, the upper supporting axis 633a and the lower supporting axis 635a are provided and, in Figure 23, the supporting axis 65 on the lower side is provided, but a configuration may be that only a supporting axis on the upper side is provided (not shown). Moreover, also regarding the barrel 5 that is not divided, a configuration may be that it is supported only with the supporting axis 609 on the upper side (not shown).

Moreover, in Embodiments 1-6, a supporting member of a disk shape is utilized, but a configuration may be made so as to demonstrate a flywheel effect. Specifically, it is possible to form the one with a metal and so forth so that the mass becomes heavy. Moreover, as shown in the supporting member 204 of Figure 24(a), it is enough that the materials of the middle portion 204a and the periphery portion 204b are altered, and that, as the material of the periphery portion 204b, the one the mass per unit volume of which is heavy in comparison with the material of the middle portion 204a is utilized. Further, for example, as shown in Figure 24(b), on the whole lower side of the lower-side supporting member 604 (see Figure 6) may be arranged the weight 605 and, as shown in Figure 24(c), in the surrounding of the lower side of the lower-side supporting member 604 may be arranged the weight 608.

Moreover, in order to allow a flywheel effect to be possessed also with respect to the supporting member 40 of above-mentioned Embodiment 7, of the material of the outside portion 45, the one the mass per unit volume of which is heavy in comparison with the materials of the middle part 41 and the inside portion 46 may be utilized.

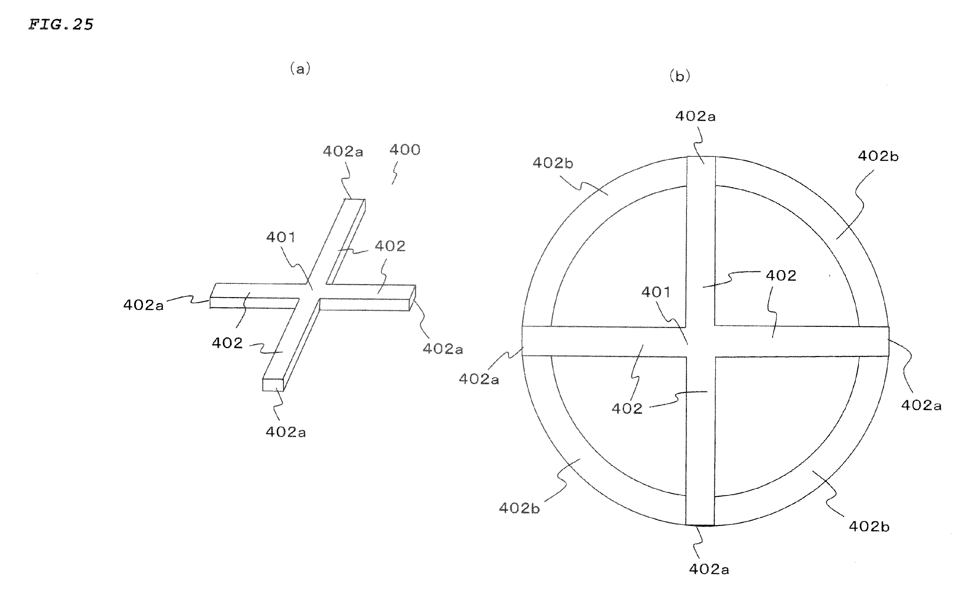

Moreover, the supporting member 400 of such a cross shape as is utilized in the above-mentioned variant example of Embodiment 2 of Figure 8 is shown in Figure 25(a). This supporting member 400 is of a cross shape in plan view, and has the middle part 401 to which the electric-generator rotation axis 3a and the longitudinal axis 603 are fixed, and the arm parts 402 formed so as to protrude from the middle part 401 in all directions. By utilizing, of the material of the neighborhoods of the tip ends 402a of the arm parts 402 like these, the one the mass per unit volume of which is heavy in comparison with the materials of the other portions, it is possible to allow a flywheel effect to be demonstrated.

Moreover, even if the material of the neighborhoods of the tip ends 402a is not modified, as shown in Figure 25(b), by forming the annulus-shaped member 402b that links the tip ends 402a of the arm parts 402 in the shape of an annulus it is possible to allow a flywheel effect to be possessed.

Moreover, in above-mentioned Embodiments 1-7, the four barrel sets 50 have been provided, but the count may be equal to or less than three or, alternatively equal to or more than five. Additionally, at this time, it is more preferable that the plural barrel sets 50 are arranged in plan view around the electric-generator rotation axis 3a at equal intervals. Disposing them like this radially around the electric-generator rotation axis 3a at equal intervals it is possible to allow the varying weighting that arises on the electric-generator rotation axis 3a to level off. Moreover, by properly arranging the number of the barrel sets 50, it is possible to grow the rotation torque of the electric-generator rotation axis.

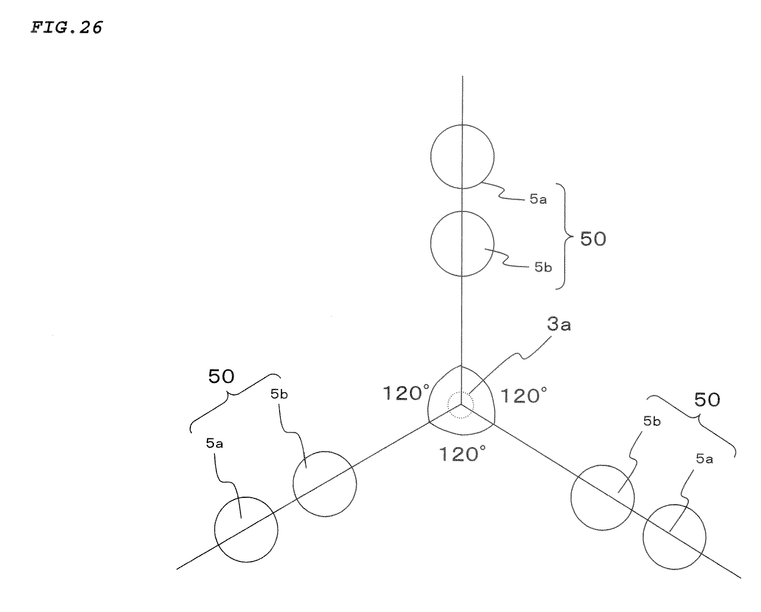

For example, in a case where there are three barrel sets, as shown in Figure 26, it is more preferable that the arrangement is carried out such that the angles each the adjoining barrel sets 50 and the electric-generator rotation axis 3a form become approximately 120 degrees. Additionally, from the viewpoint of the standardization of the varying weighting it is more preferable that they are arranged around the electric-generator rotation axis 3a at equal intervals, but the only one barrel set 50 may be arranged. Only one set may be provided.

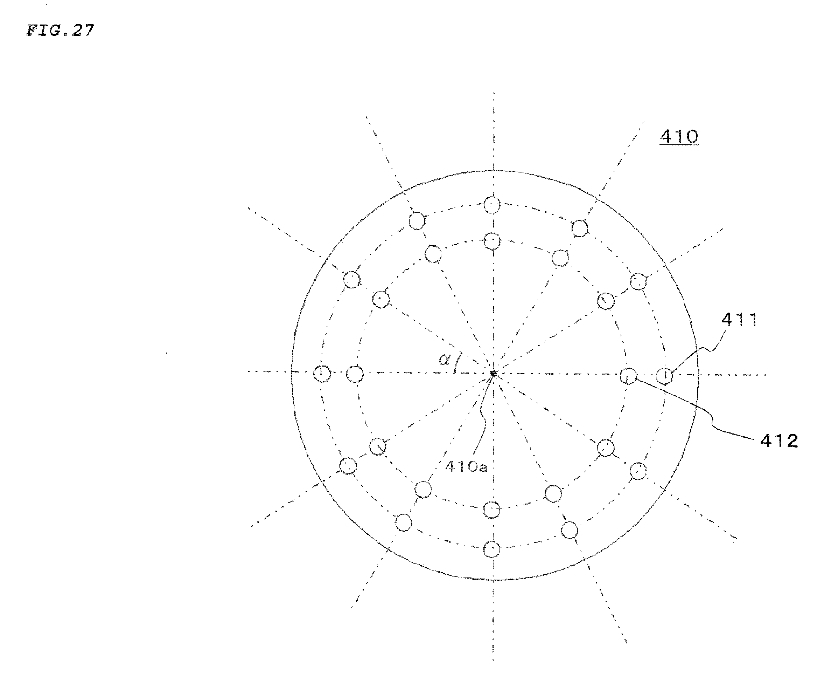

Moreover, a configuration may be allowed to be that, in the supporting member of a disk shape of Embodiments 1-6, the plural axis bearing parts 4b such that the supporting axes 6 are capable of being arranged are formed to selectively arrange the barrels 5. Figure 27 is a plan configuration view of the supporting member 410. In the supporting member 410 is at its center 410a fixed with the electric-generator rotation axis 3a, and are provided the axis bearing parts 411 that arrange the supporting axes 6 of the barrels 5 on the outside, being capable of rotating, and the axis bearing parts 412 that arrange the supporting axes 6 of the barrels 5 on the inside, being capable of rotating. And, in the supporting member 410 shown in Figure 27, for the set of the axis bearing part 411 and the axis bearing part 412, twelve sets are formed. Moreover, the angular degrees (see a in the figure) that are formed by the adjacent lines which tie the set of the axis bearing parts 412 and 411 and the center 410a are all allowed to be equal. By utilizing the supporting member 410 formed like this, it is possible to carry out selection such that the one, two, three, four, six or twelve barrel sets 50 are utilized. Additionally, in the case of two, three, four or six, it is more preferable that each and all of the barrel sets 50 are arranged around the center 410a at equal intervals. Additionally, in the case of the configuration of Embodiment 1, the supporting axis 6 on the inside and the supporting axis 6 on the outside allowed to be one set also regarding the cover member 11, the holes are formed through which the twenty-four supporting axes 6 in total of twelve sets go.

By forming like this plural axis bearing parts, commonalization of the components becomes capable of being designed so that cost reduction is possible and further, also after factory shipment, or after installation it is possible to increase or decrease the number of the barrel sets.

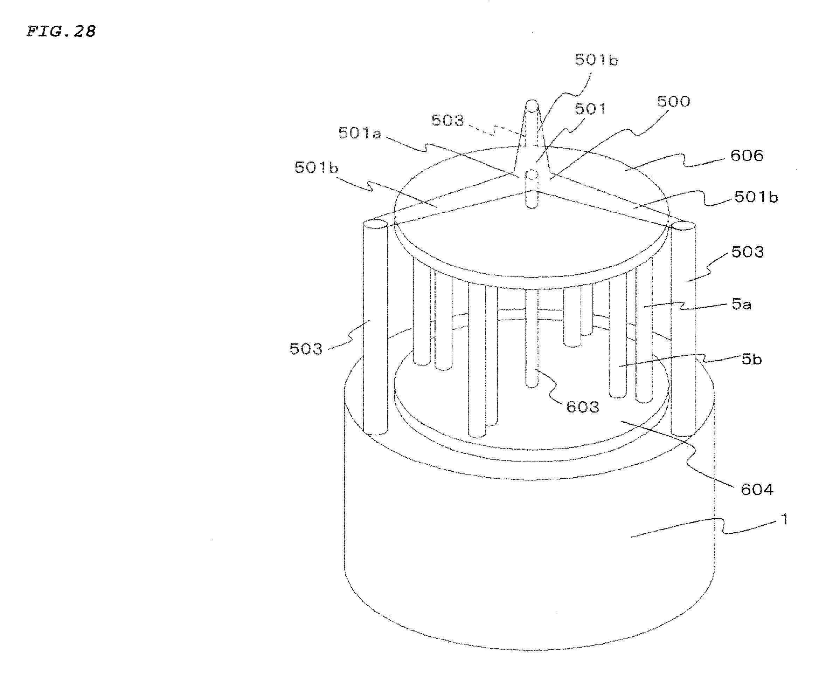

Moreover, as shown in Figure 28, a frame structure may be provided that supports the windmill part so as to cover it. Figure 28 is a perspective configuration view that shows a configuration such that, to the configuration of Embodiment 2 that has been shown in Figure 6, the frame structure 500 has been appended.

As shown in Figure 28, the longitudinal axis 603 protrudes from the upper-side supporting member 606, and has the upper frame member 501 that supports the upper end of the longitudinal axis 603 being capable of rotating, and the three side frame parts 503 that join the upper frame member 501 and the pedestal 1. The upper frame member 501 is configured by the middle part 501 a where the longitudinal axis 603 is arranged, and the arm parts 501 b that expand from the middle part 501 a to the side frame parts 503. By making like this a configuration, it is possible for the windmill part 2 to more stably rotate.

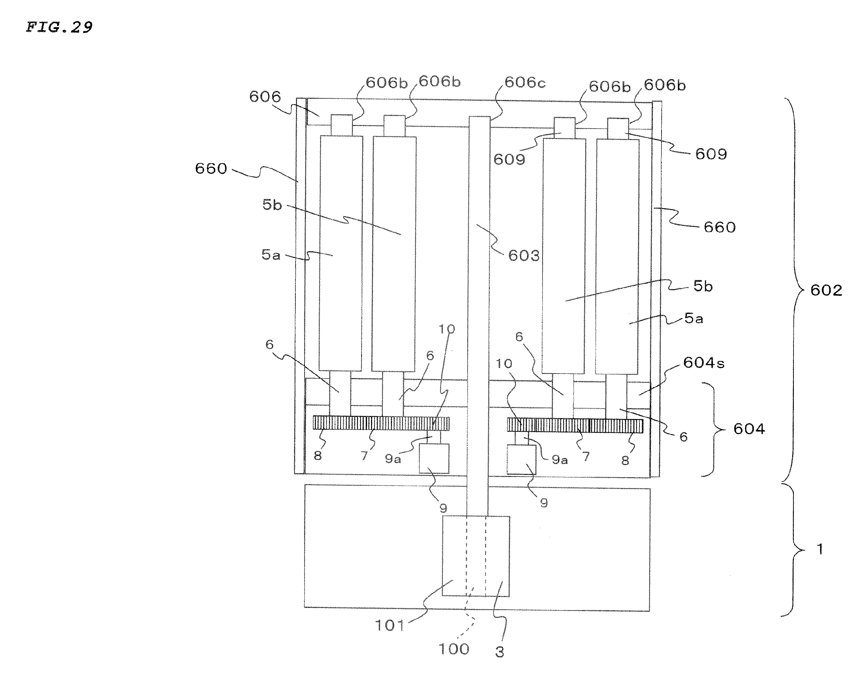

Moreover, may be adopted a configuration such that the upper-side supporting member 606 and lower-side supporting member 604 of the configuration of Embodiment 2 are, to hold the upper-side supporting member 606, partly joined. Figure 29 is a view that shows a configuration like that. As shown in Figure 29, so as to hold the upper-side supporting member 606, in intermediate positions of the plural barrel sets, from the lower-side supporting member 604 are provided the longitudinal frames 660.

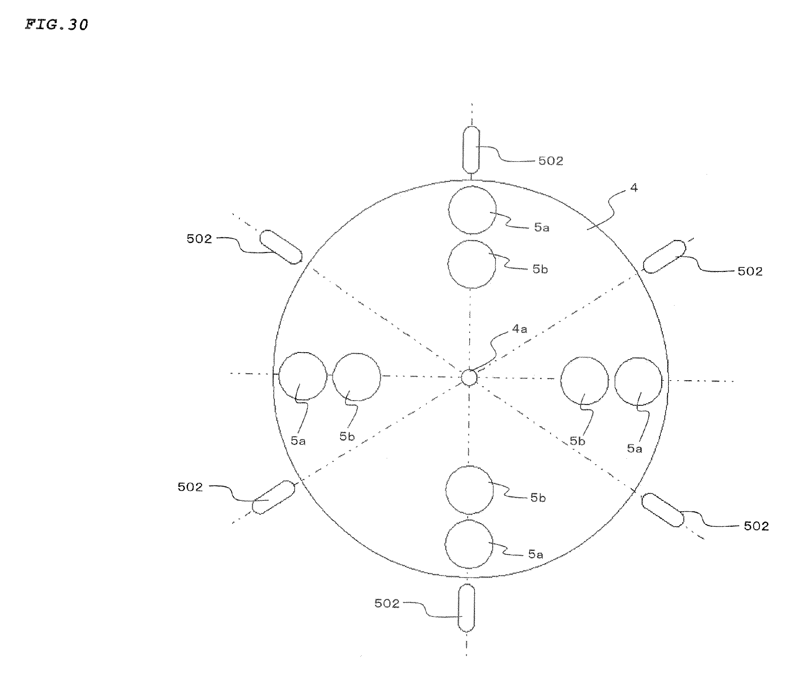

Moreover, on the outside of the supporting member 4 may be provided current-rectifying plates. Figure 30 is a plan configuration view of the vertical-axis-type Magnus-system wind power electric generator with the four barrel sets 50 arranged. As shown in Figure 30, at intervals of 60 degrees in directions towards the center 4a, on the outside of the supporting member 4 are provided the current-rectifying plates 502. Directing the wind, by arranging like this the current-rectifying plates 502, in directions towards the longitudinal axis of the windmill part, the shielding quantities of the barrels on the downwind side become large, and it is possible to efficiently carry out the electric generation. Moreover, between the barrel sets 50, and the center 4a (agreeing with the longitudinal axis) may be provided current-rectifying plates.

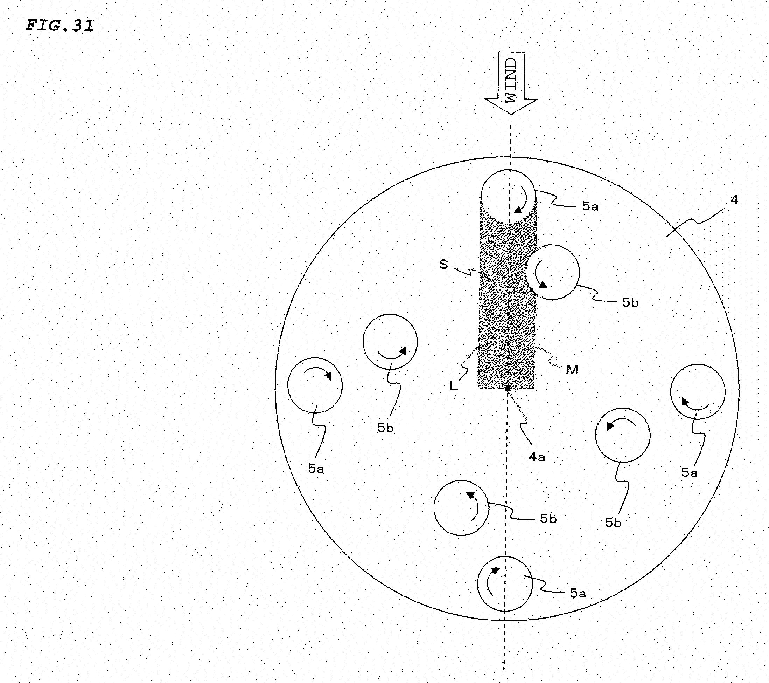

Additionally, in the barrel set 50 of the above-mentioned embodiments, for the barrel 5b, its center is arranged on the line that ties the barrel 5a and the center 4a (agreeing with the longitudinal axis) but, not being limited to this, it is enough that the arrangement is carried out between the barrel 5a and the center 4a. Yet, as shown in Figure 31, it is more preferable that at least one part of the barrel 5b is contained within the region S. The region S is a region between the two tangential lines L and M at the outer periphery of the barrel 5a, which are parallel with a straight line that ties the barrel 5a and the longitudinal axis.

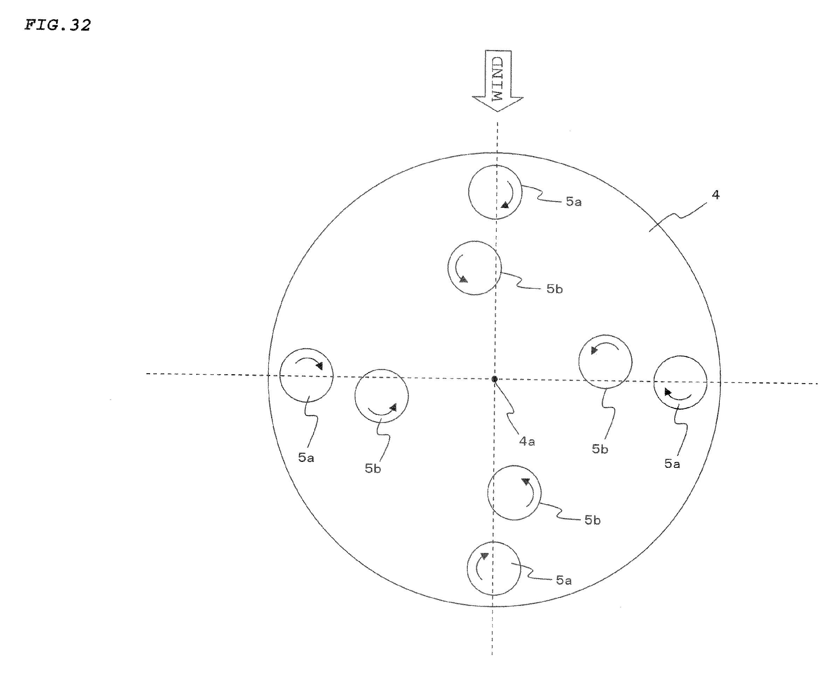

Moreover, it is even more preferable that the barrel 5b is, as shown in Figure 32, arranged such that at least one part of it sits on the line that ties the barrel 5a and the center 4a of the longitudinal axis.

Additionally, the vertical-axis-type Magnus-system wind power electric generator of the present invention may be allowed to comprise a solar battery.

Moreover, in the pedestal internal part of the vertical-axis-type Magnus-system wind power electric generator of the present invention, an electric-power storing means for storing the electric power said electric generator has generated, or the electric power said solar battery has generated may be provided.

It is possible to suitably select and utilize said electric-power storing means, the commercial electric source and the like, as the electric source that allows the barrels 5 to spin, or, the electric source on the occasion that the electric-generator controlling part 17 controls the switching part 14, and utilizes the electric generator 3 as a power source.

Moreover, the motor 9 that allows the barrels 5 to spin may be, not limited to an AC motor, a DC motor. In a case where a DC motor is utilized, and besides as the electric-power storing means has been utilized a storage battery, it is possible to employ a direct current of the electric power stored in the storage battery as it is.

Moreover, in a case where the wind velocity by means of the wind velocity meter has become faster than the predetermined wind velocity, or in a case where the rotation number of the rotator (the electric-generator rotation axis 3a or the rotator 624b) has become larger than the predetermined rotation number, controlling may be performed so that the windmill part is stopped. For this stopping, it is enough that an electro-magnetic brake and the like are utilized.

As above, with the present invention, since no influence of the wind direction is exerted and, in either region on the upwind and downwind sides of the electric-generator rotation axis, the rotation torque in the identical direction with respect to the electric-generator rotation axis is generated, the electric-generation efficiency is high.

Moreover, measuring the wind velocity or the rotation number of the electric-generator rotation axis 3a, and on the basis of that allowing the spinning rotation numbers of the barrels 5 to change, the startability becomes excellent, and moreover electric generation is capable of being carried out in a broad wind velocity area.

Further, because at the time of such a strong wind as causes a trouble with the safety of the wind power electric generator, stopping the spinning of the barrels 5, the Magnus forces become 0 and, besides, the barrel shape is less prone to be exerted by the wind pressure, the overrotation of the electric-generator rotation axis 3a is prevented, and it is possible to carry out safe stopping.

Furthermore, since for the wind power electric generator of the present invention, it is not necessary to perform the spinning rotation number controlling of the barrels individually and besides frequently, and moreover the responsiveness deterioration of the barrel at the time of size-increasing with respect to the spinning rotation number controlling is less prone to bring about a deterioration of the electric-generation efficiency, the size-increasing is easy.

Furthermore, because the wind power electric generator of the present invention does not necessitate a high tower as a wind power electric generator of a horizontal-axis type, the installation in the rooftop of a building, house or the like becomes capable of being carried out.

Furthermore, for the wind power electric generator of the present invention, it is possible to install the electric-generation portion near the ground, and the maintenance is easy.

Furthermore, because for a blade of a barrel shape the manufacturing is easy, and the wind direction measuring device and so forth are unnecessary with a configuration being simple as well, it is possible to lower the manufacturing cost and the maintenance cost.

Therefore, by the present invention, it is possible to furnish a wind power electric generator such that no influence of the wind direction is exerted, the electric-generation efficiency is high, the startability is excellent, the electric generation is capable of being carried out in a broad wind velocity area, besides the safety with respect to a strong wind is high, moreover the size-increasing is easy, the installation on the rooftop of a building, house or the like is capable of being carried out and, further the manufacturing and putting-into-practice at a low cost is capable of being carried out.

### Industrial Applicability

A vertical-axis-type Magnus-system wind power electric generator of the present invention demonstrates an effect such that the electric-generation efficiency is high with simple controlling, and is useful as a wind power electric generator and so forth of an environment as Japan where the wind velocity is low.

### Description of Symbols

- 1: pedestal
- 2: windmill part
- 3: electric generator
- 4: supporting member
- 5: barrel
- 6: supporting axis
- 7: first gear
- 8: second gear
- 9: motor
- 10: driving gear
- 11: cover member
- 12: spinning controlling part
- 13: stopping-time detecting part
- 14: switching part
- 15: wind velocity meter
- 16: rotation-number detecting part
- 17: electric-generator controlling part
- 18: temperature meter
- 19: snow sensing meter

## Claims

1. A vertical-axis-type Magnus-system wind power electric generator,
a windmill part that has a longitudinal axis, and rotates by wind power on its longitudinal axis; and
an electric generator that has a stator, and a rotator joined to said windmill part, wherein
said windmill part has:
a barrel set that possesses two barrels which are arranged in parallel with said longitudinal axis, and rotate around said longitudinal axis; and
a supporting member that joins said barrel set to said longitudinal axis, wherein
each of said two barrels is configured so as to be capable of spinning around a supporting axis that is supported by said supporting member, and
spinning directions of said two barrels are directions opposite each other.

2. A vertical-axis-type Magnus-system wind power electric generator according to claim 1, wherein
said one barrel of said two barrels, which is on an inside, is arranged between said other barrel that is on an outside and said longitudinal axis.

3. A vertical-axis-type Magnus-system wind power electric generator according to claim 2, further comprising an airflow shielding means provided between said two barrels, in order to shield an airflow to said barrel of said two barrels that is on a downwind side.

4. A vertical-axis-type Magnus-system wind power electric generator according to claim 3, wherein
at least on a side end face within a surface of said airflow shielding means, a shape for allowing an airflow to diffuse or disperse is formed.

5. A vertical-axis-type Magnus-system wind power electric generator according to claim 1, comprising:
a stopping-time detecting part that detects a stopping time of said rotator;
a switching part that utilizes external electric power to employ said electric generator as a power source;
an electric-generator controlling part that performs controlling of said rotator; and
a spinning controlling part that performs controlling of spinning of said barrel, wherein
in a case where said rotator is not stopping,
said spinning controlling part, every certain time, performs controlling so as to allow said barrel to spin at a rotation velocity equal to or more than a second predetermined rotation velocity, and
in a case where said stopping time of said rotator is equal to or more than a predetermined time,
said electric-generator controlling part, every certain time, switches said electric generator to said power source by said switching part, and allows said rotator to drive at second predetermined rotation velocity, and said spinning controlling part performs controlling so as to allow said barrel to spin at a rotation velocity equal to or more than second predetermined rotation velocity, or at a rotation velocity equal to or less than a third predetermined rotation velocity.

6. A vertical-axis-type Magnus-system wind power electric generator according to claim 1, comprising a current-rectifying plate provided at least either between said barrel set and said longitudinal axis, or on an outside of said supporting member.
